(19) Europäisches Patentamt

European Patent Office

Office européen des brevets

(11) Publication number: **0 307 466 B1**

# EUROPEAN PATENT SPECIFICATION

(12)

(45) Date of publication of patent specification: **29.09.93**  (51) Int. Cl.⁵: **G05B 13/04**

(21) Application number: **88903693.5**

(22) Date of filing: **30.03.88**

(86) International application number:
**PCT/US88/01080**

(87) International publication number:
**WO 88/07708 (06.10.88 88/22)**

(54) **MULTIVARIABLE ADAPTIVE FEEDFORWARD CONTROLLER.**

(30) Priority: **30.03.87 US 31964**

(43) Date of publication of application:
**22.03.89 Bulletin 89/12**

(45) Publication of the grant of the patent:
**29.09.93 Bulletin 93/39**

(84) Designated Contracting States:
**DE FR GB**

(56) References cited:
**EP-A- 0 152 871**
**US-A- 4 349 869**

(73) Proprietor: **THE FOXBORO COMPANY**
**33 Commercial Street**
**Foxboro, MA 02035(US)**

(72) Inventor: **BRISTOL, Edgar, H.**
**6 Maple Place**
**Foxboro, MA 02035(US)**
Inventor: **HANSEN, Peter, D.**
**59 Fiske Road**
**Wellesley, MA 02181(US)**

(74) Representative: **Henkel, Feiler, Hänzel & Partner**
**Möhlstrasse 37**
**D-81675 München (DE)**

## Description

The present invention relates to a process controller and a method for multivariable adaptive control for controlling industrial or similar processes and particularly to self-tuning controllers, wherein operating parameters are developed in response to changes in the process inputs.

Control systems regulate many material, energy and guidance systems. The home heat control thermostat is a familiar example. More sophisticated devices are used in refineries, and complex industrial facilities, where input materials are processed into products. Feedback and feedforward mechanism are used to assure accurate production despite variations in the inputs, or changes the desired output. Feedback control is the more common control method. Feedback compares the system output, called the controlled variable, with the desired output, called the set point, to generate an error value. The size and direction of error are used to correct the system response towards the desired output. Since feedback response to a load disturbance occurs after a change in the controlled variable has been sensed, the system is frequently not exactly on target. Mistuning by operators and changed system characteristics are additional Sources for system error.

Recently self-tuning or adaptive feedback control systems have been developed that use abstract rules to reset the tuning of a control system as the device learns from its experience with the process. An adaptive system adjusts its control parameters as the process changes. Adaptive feedback controllers can be connected, turned on, and left to tune and retune themselves to provide consistently better control than manually adjusted controllers. As a result adaptive feedback controllers are increasingly used in industry.

Feedforward control is a rarer and more specialized control method. Feedforward recognizes that upsets in the inputs to the system can be used to adjust the system devices in anticipation of or simultaneously with the arrival of those upsets. If all the load variables for a particular process are sensed, transmitted and responded to without error, and if the relationship between manipulated and measured variables is exactly known, then perfect control is theoretically possible.

Feedforward control is usually accomplished in one of two ways. One requires finding a process equation describing the controlled variable as a function of the load variables, manipulated variables and set point. Several relationships are used to balance the input and output material and energy in conjunction with other inferential or empirical relationships. The process equations provide a basis for a general transfer function relating the inputs to process results. Once the transfer function is formulated, load signals are processed by a compensator to generate a control action that preadjusts the manipulated variable in anticipation of the load variations. Implementation of traditional feedforward then requires specific engineering of the particular process equations.

A second feedforward method presumes some generalized model for which coefficients of model terms are adjusted according to actual conditions. The generalized model is then specialized according to empirical methods. A generalized description usually requires complex mathematical processing which is exacerbated as the number of terms increase with the loads sensed. Such complexity requires more computing time and equipment for a specifically defined process. Since the generalized model is not restrained like a standard process equation is, for example, by a material energy balance equation, inaccuracies in the model must be specifically corrected. Practical implementation of generalized models then often leads to slow or inadequately performing devices.

Adaptive control techniques also make presumptions about the load and process to establish descriptive equations directed at exact models. In the immediate control procedure, time sampled data is applied continuously to the model to generate a control signal for the manipulated variable. For adaptation, the control model is continuously updated with each sample according to error evaluation procedures. The sample data driving the model is then concerned with the immediate present, the current values, and current rates of change, and how these cause an error between the model and the process. Unfortunately the narrow time frame of continuous models necessarily leads to the processing of the immediate system noise along with the any true system changes. Adaptation to noise in a feedforward system leads to inaccurate overresponse, while failure to adapt leads to poor control.

Typically, load and manipulated variables enter the process at different locations and have process effects that are spread over time. Processes usually respond slowly, integrating load variations over time. The process response is then a time sharing of the inputs, making relations between the inputs and outputs complex. As a result continuous or time sampling models are blind to the history of the process unless memory of previous events is included. However, a broad time frame can average real information into insignificance. A problem then exists with the degree of influence prior events should have.

One method to Correct feedforward Control errors is to join a feedback controller with the feedforward device. Cumulative errors in the feedforward control cause the controlled variable to be offset from the set point. The feedback controller Corrects the error, forcing the controlled variable to the set point. Feedback control corrects the feedforward offset error, but in doing so may disguise system response making proper feedforward adaptation difficult. Coordination between the feedforward and feedback actions can then be a problem, especially in an adaptive system.

Other problems have inhibited feedforward control deployment, especially in a multivariable adaptive form. Numerous other problems with multivariable adaptive feedforward control exist. Measurements may be inaccurate. Sensing all the loads may be impossible or excessively expensive. Models are never perfect in practice. Model relations may be unsolvable in an exact form, or unknowable due to equipment wear. Model complexity may slow the device, thereby limiting response time, or the number of loads controllable. Computational errors may occur or cumulate over time. Computational resources proportional to the square of the loads sensed may be required. The device may be ignorant of events having variable or unknown time duration. The device may not adapt all data as where several loads have related response results. The device may not give good control with incomplete data. The device may not interchangeably receive feedback controls and may act in conflict with feedback controls. Human intervention may be required to tune and retune the device.

Prior art document EP-A-0 152 871 discloses a process control apparatus which comprises a feed back control system for outputting a feedback control signal which is computed by comparing and adjusting a set value and a process variable, and a feedforward control system for outputting a disturbance compensation signal by detecting and compensating for a disturbance based on a feedforward control model. The gain of the feedback control signal is corrected in response to the magnitude of disturbance variations by a gain scheduling unit, and the gain of the feedforward control model is controlled by supplying a correction signal which compares and equalizes, at a feedforward control model gain adaptive unit, the disturbance compensation signal and a manipulated variable obtained by additively synthesizing the disturbance compensation signal and the feedback signal that is gain-corrected by the gain scheduling unit. The feedforward control model comprises a gain memory for memorizing the FF model gain correction signal from the feedforward control model gain adaptive unit and an operational means for receiving a correction signal from the gain memory and a disturbance signal to compute and output a disturbance compensation signal. The process control apparatus further includes an FF model gain adaptive mechanism for controlling the supply to the gain memory of the FF model gain correction signal by confirming that the process is in a steady state, the process is settled, and a state continues in which the difference between the disturbance compensation signal and the manipulated quantity exceeds a prescribed value, and for controlling as well the additive synthesis of the disturbance compensation signal to the feedback control signal. In this way, this known apparatus is capable of improving the controllability to the utmost limit by restraining the changes in the process variable to a minimum for any variations in the disturbance whatsoever.

It is an object of the present invention to provide a robust adaptive feedforward controller, in which variations in system relations, and variations in timing attributes are accommodated by adaptive feedforward control while at the same time accommodating load variations, which operates with incomplete data, and which is suitable for a number of disturbance variables whose rate of adaptation is reasonably quick with few disturbances on only subsets of the inputs.

To solve this object the present invention provides a process controller and a method for multivariable adaptive control as specified in claims 1 and 13, respectively. References hereinafter to characterizing a signal mean deriving a mathematical function expressing the variation of that signal with time.

A method and apparatus have been developed for multivariable adaptive feedforward control wherein naturally occurring transients are detected and characterized. The signal transient characterizations give coefficients for process model transfer functions convergeable to the actual process transfer functions. Projection between successive solutions provides converging control in a multivariable system even with incomplete data. The process transfer function coefficients are used to develop feedforward compensation of the process inputs to correctly counteract input changes to the process.

The apparatus includes detectors for measuring upsets in the inputs of a process, means for measuring a controlled output of the process, means for reducing the measured upset values to control coefficients, and means for subsequently refining the control coefficients to increasingly accurate values. The apparatus receives feedforward signals, feedback signals, and process signals; detects signal disturbances to adaptively determine compensation coefficients for compensating the input signals; and generates an adapted feedforward control signal from the compensated input signals. Inputs to a process are examined to detect disturbance events. Disturbances are mathematically characterized according to a chosen series description until an end of the disturbance is determined. The response of the process to the disturbance events is sensed and similarly described. The two descriptions are then related on a term-by-term basis, allowing the formation of transfer functions to compensate future load variations. The use of whole disturbance events allows strong control relations to be established and avoids time series, or continuous relation calculations. Disturbances are mathematically characterized by moment relations, and control relations are achieved by projection methods. The present method and apparatus thereby provides a multivariable adaptive feedforward controller designed to satisfy the aforementioned needs.

This invention can be more fully understood from the following detailed description when taken in conjunction with the accompanying drawings, in which:

FIG. 1 is a block diagram depicting a basic embodiment of the present invention in a feedforward control environment.

FIG. 2 is a block diagram depicting a preferred embodiment of the present invention in a feedforward control environment.

FIG. 3 control diagram of a section of FIG. 2.

FIGS. 4a-4e are a flow chart of processing steps.

FIG. 5 is a flow chart of preferred processing steps.

Best Mode for Carrying Out the Invention

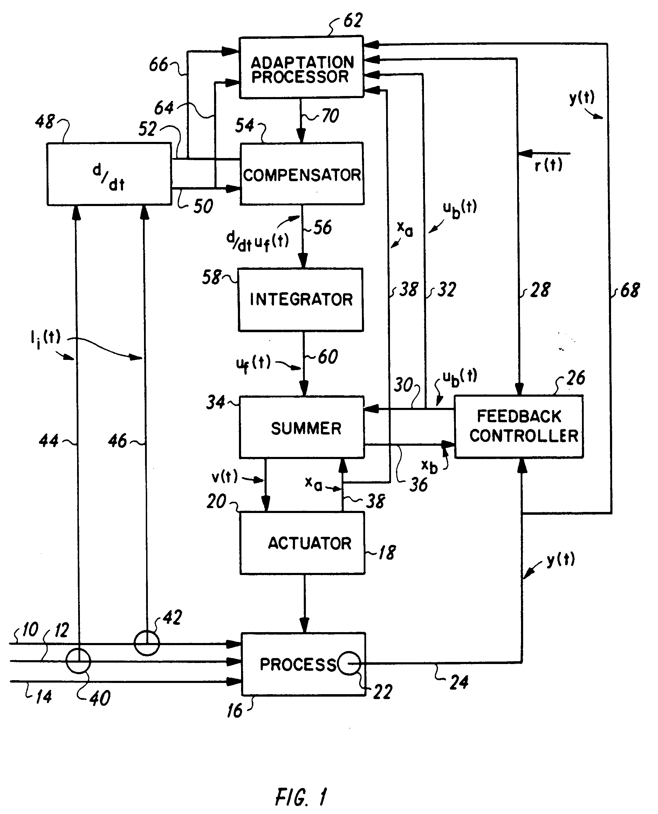

FIG. 1 is a block diagram depicting a basic embodiment of the present invention in a feedforward control environment. A series of process loads 10, 12, 14 join to influence a process 16 having an unknown transfer function. The process 16 in response to the loads 10, 12, 14 and a final control signal v(t) on lead 20 affecting an actuator 18 produces a time-varying process condition to be controlled which is detected by a sensor 22. The sensor 22 generates a corresponding measurement signal y(t) on leads 24 and 68 also called a feedback signal, which is typically digitally converted and filtered by known circuit means (not shown) before being returned to a feedback controller 26.

The feedback controller 26 receives along with the measurement signal y(t), a set point signal r(t) on lead 28 indicating the desired process result for the measurement signal y(t). The feedback controller 26 then computes a feedback control signal $u_b(t)$ on lead 30, which is supplied to a summer 34, and in one alternative to a feedforward adaptation processor 62 on lead 32. The feedback controller 26 may be of any ordinary design, which is a useful aspect of the embodiment of FIG. 1. A simple feedback controller 26 might compute the difference between the sat point signal r(t) and output measurement signal y(t) to generate the feedback control signal $u_b(t)$ as a mere error signal. Feedback control commonly includes proportional, integral, and derivative functions, and other more complex feedback signals are known in the art and are contemplated here. The preferred feedback controller 26 includes such more complex functions and is further equipped with standard means to receive a returning external feedback signal $x_b$ on lead 36 such that if the external feedback signal $x_b$ differs significantly from the issued feedback control signal $u_b(t)$ on lead 30, the feedback controller 26 integration function is limited to prevent windup. The preferred feedback signal provided to the adaptation processor 62, is the external feedback signal $x_b$ on lead 36.

A number of the input loads 10 and 12 are monitored by input sensors 40, and 42, providing time-variant load signals $l_i(t)$ on leads 44, and 46. The monitored inputs are indexed here by the subscript i, ranging from one to n, where n is the number of monitored inputs. The load signals $l_i(t)$ are typically digitally converted and filtered by known circuit means (not shown). In the preferred embodiment, the load signals $l_i(t)$ are then differentiated by known means 48. Differentiation is not necessary; however, since the load signals are treated similarly whether or not differentiated, it is convenient to refer to the load signals here as $l_i(t)$ in both cases.

Not all the loads must be measured in the embodiment, as exampled by load 14. Unmeasured loads are expected, and are treated here cumulatively as a single unmeasured load signal, $l_u$. Effective feedforward adaptation occurs despite such incomplete data.

The load signals $l_i(t)$ are supplied to a compensator 54. The preferred embodiment of the compensator 54 includes a microprocessor having memory and calculation portions, but other fixed function electronic devices are contemplated as equivalent embodiments. The compensator 54 includes signal processing means for transforming each measured load signal $l_i(t)$ into a component of a feedforward control signal $u_f(t)$. Compensator 60 receives each load signal $l_i(t)$, and generates a compensation for each load signal $l_i(t)$ according to a transfer function $A_i$ defined by a series of compensation coefficients $a_{ij}$ which approximate ideal compensation coefficients $a^*_{ij}$. The coefficients $a_{ij}$ may be viewed as coefficients in a polynomial series of a Laplace transform. The subscript i refers to the load signal $l_i$ and the subscript j refers to the jth element of the series. The load signals $l_i(t)$ are operated on by the compensation operators represented by the transfer functions $A_i$ to produce compensated load signals $C_i = A_iL_i$ where $A_i$ are transfer functions and $L_i$ are Laplace transforms of the load signals $l_i(t)$. The compensated load signals $C_i$ are cumulated into a single feedforward control signal $u_f(t)(= \Sigma_iC_i)$. Where the load signals $l_i(t)$ are differentiated, 48, the

4

unintegrated compensated total, referred to as d/dt $u_f(t)$ on lead 56, is integrated in an integrator 58 of known circuit means to produce the feedforward control signal $u_f(t)$ on lead 60.

The feedforward control signal $u_f(t)$ on lead 60 is combined with the feedback control signal $u_b(t)$ on lead 30 in the summer 34 to produce a final control signal $v(t)$ ($= u_f(t) + u_b(t)$) on lead 20 which is supplied to the actuator 18 affecting the process 16.

The actual response of the actuator 18 is measured to produce an external actuator measurement signal $x_a$ on lead 38. In the simplest case, the external actuator measurement signal $x_a$ may be taken directly from the final control signal $v(t)$ on lead 20. The external actuator measurement signal $x_a$ on lead 38 is supplied to the summer 34. Summer 34 which combines feedback control signal $u_b(t)$ and feedforward control signal $u_f(t)$ to compute the final control signal $v(t)$ on lead 20, also back calculates the true response of the actuator 18 to the feedback control signal $u_b(t)$ on lead 32 by removing the feedforward control signal $u_f(t)$ on lead 60 from the external actuator measurement signal $x_a$ on lead 38 to produce the external feedback signal $x_b$ on lead 36. The external feedback signal $x_b$ on lead 36 is returned to the feedback controller 26, and thereby to the adaptation processor 62. The preferred method uses the external feedback signal $x_a$ on lead 38 as the better measure of the feedback control. Alternatively, although less preferred, the feedback control signal $u_b(t)$ 32 may be supplied to adaptation processor 62 as the feedback control signal $u_b(t)$.

The load signals $l_i(t)$ on leads 50, and 52 are also supplied to the adaptation processor 62 on lead 64, and 66. The adaptation processor 62 comprises in the preferred form a microprocessor having memory and calculation portions. The adaptation processor 62 receives the measured: load signals $l_i(t)$, the measurement signal $y(t)$ on lead 68, and the external actuator measurement signal $x_a$ on lead 38. Alternatively, the external feedback control signal $u_b(t)$ on lead 32 may be substituted for the external actuator measurement signal $x_a$ on lead 38 in the adaptation processor 62. FIG. 1 shows both the feedback control signal $u_b(t)$ and the external feedback control signal $x_a$ connected to adaptation processor 62. Variations in the process input variables, the load signals $l_i(t)$ and the feedback control signal $u_b(t)$, are then related to the measurement signal $y(t)$ to generate series coefficients $a_{ij}$ for the compensator 54. Newly generated coefficients $a_{ij}$ are transferred over lead 70 to compensator 54 to update the feedforward compensation process of compensator 54.

Summary operation of the embodiment shown in FIG. 1 occurs as follows. A set point signal $r(t)$ is applied to the feedback controller 26 along with the process measurement signal $y(t)$. The feedback controller 26 generates a feedback control signal $u_b(t)$. The feedback signal $u_b(t)$ is supplied to the summer 34 providing feedback control. Initially the compensators are unadapted and null, so no feedforward control signal $u_f(t)$ is received from compensator 54, and only feedback control is used ($u_f(t) = 0$, $u_b(t) = v(t)$). The feedback controller 26 acts to match the actual measurement signal $y(t)$ to the desired set point signal $r(t)$. The final control signal $v(t)$ on lead 20 is compared with the external actuator measurement signal $x_a$ 38 to check that the expected result occurred. If the actuator unexpectedly bounded, the external actuator measurement signal $x_a$ 38 indicates the bounding. The external feedback signal $x_b$ on lead 36 is normally equal to feedback control signal $u_b(t)$ on lead 32 unless an unaccounted limiting causes the external actuator measurement signal $x_a$ 38 to differ from the final control signal $v(t)$ on lead 20 causing the external feedback control signal $x_b$ on lead 36 to differ from the feedback control signal $u_b(t)$ on lead 32.

The feedback signal $u_b(t)$ on lead 32 or external feedback signal $x_b$ on lead 36 indicates the cummulative error between the ideal transform function and the currently operating model if adjusted by any set point change $r(t)$. The feedback signal $u_b(t)$ is therefore supplied to the adaptation processor 62 along with the measurement signal $y(t)$ on lead 68 to refine a feedforward control model. The preferred feedback signal $u_b(t)$ is taken from the external actuator signal $x_a$ on lead 38.

Concurrently with feedback control, disturbances in the load signals $l_i(t)$ are continually searched for by the adaptation processor 62. The load signals $l_i(t)$ are assumed to track the process from one steady state condition to another, and an unknown relation describes the process response to the inputs between steady states. Transient changes in the inputs can then be related to transient changes in the output to determine the process response relation. If the process response relation is reversed, and the inputs to the process compensated by the reverse, then the result may be subtracted from the control. The inputs then add to the reduced control to give a steady process response. The adaptation processor recognizes the start of a transient as a change in a measured process variable from an initial settled or steady-state condition and subsequently determines an end condition which may be the recognition of the end of the transient as the return of all affected process variables to a second settled or steady-state condition. The disturbed signals are mathematically characterized and related to the process response to generate compensation coefficients.

When a disturbance is detected, the adaptation processor 62 initializes the disturbance adaptation. If desired, the control system may adjust for the effect of feedforward compensation on feedback adaptation, for example, by disabling independent feedback adaptation action when transient disturbances in the load signals are recognized. Where the control system is coupled with an external self-adapting feedback controller, the feedback controller, not being coordinated with the feedforward compensation signals, may generate an incorrect adaptation. The external adaptive feedback controller should be momentarily disabled, if a feedforward disturbance is detected. Similarly, where the feedforward adaptation is incomplete, leaving an error in the dynamic compensation, the feedback control may provide a redundant control, so scaling down the feedback control while the feedforward controller adapts the control coefficients to the load transients may be desirable. Scaling back the feedback is particularly useful to prevent the loop from becoming unstable at another operating point. There may also be circumstances when the feedforward control correction should be scaled to a fraction of the computed ideal value, as lead compensation is used to cancel process delay.

Once a disturbance event is sensed, an estimate of the likely duration of the transient is made. The transient's progress is then watched by the adaptation processor 62 while simultaneously being numerically characterized. The duration estimate is used to measure when tests for the transient's end are made. After a first disturbance has concluded, a first approximation of feedforward control is adapted and supplied as a series of compensation coefficients $a_{ij}$ to the compensator 54 along lead 70. If settling does not occur in a reasonable period, set by a disturbance time estimate, adaptation may be aborted.

The feedforward compensator 54 includes an approximation of the ideal transfer function as adapted from the last sensed transient. The transfer function may be represented as a sum, $C = \Sigma_i C_i = \Sigma_i A_i L_i$, where the $A_i$ transfer functions are characterized by coefficients $a_{ij}$ held in the compensator's memory.

The compensator 54 continuously receives the load signals $l_i(t)$ on leads 50, and 52, and calculates for each load signal $l_i(t)$ a compensated signal $C_i$ according to the transfer function $C_i = A_i L_i$, $L_i$ being the Laplace transform of $l_i(t)$, to generate feedforward compensation components for the feedforward control signal $u_f(t)$. Once the initial compensation coefficients are received, the current load signals $l_i(t)$ are individually compensated, and cumulated into a feedforward control signal $u_f(t)$, and integrated as appropriate. The feedforward signal $U_f(t)$ is then no longer zero.

The feedforward control signal $u_f(t)$ is combined with the feedback signal $u_b(t)$ to form the final control signal $v(t)$ ($v(t) = u_f(t) + u_b(t)$). Less change in feedback control signal $u_b(t)$ is required once the feedforward control signal $u_f(t)$ starts having an affect, so the portion of feedback control signal $u_b(t)$ drops.

During a subsequent disturbance, the existing approximation $a_{ij}$ of the ideal feedforward control $a^*_{ij}$ continues to be applied to the loads $l_i(t)$ through the compensator 54 and actuator 18. Feedback $u_b(t)$ is reduced but continues as a back up control ($v(t) = u_b(t) + u_f(t)$).

Meanwhile, the adaptation processor 62 monitoring any subsequent disturbance characterizes the disturbance in preparation for updating the feed-forward coefficients $a_{ij}$ with the information from the subsequent disturbance.

Again, once the subsequent disturbance ends, the newly adapted compensating coefficients are supplied to the compensator 54. With the proper compensation functions $A_i$, the compensator 54 acts on the load signals $l_i(t)$ to correctly offset the process response to the actual loads. The feedforward control signal $u_f(t)$ then modifies the process 16 through the actuator 18 so the process measurement signal $y(t)$ in time equals the set point signal $r(t)$ despite load signal $l_i(t)$ variations. No feedback control signal $u_b(t)$ is then needed to control load signal $l_i(t)$ upsets. The burden of controlling feedforward disturbances is then progressively shifted from the feedback portion to the feedforward portion of the apparatus as the feedforward parameters converge to an ideal adaptation with successive transients. Theoretically, except for offset, the feedforward control ultimately comprises most of the control ($u_f(t) = v(t)$, $u_b(t) = 0$). Feedforward cannot correct bias that has developed, so a small amount of feedback is expected to correct for noise, and unaccounted changes in the set point signal $r(t)$ or measurement signal $y(t)$.

Three problems are accommodated with the implementation shown in FIG. 1. Changing the compensator coefficients acting directly on the load signals $l_i(t)$ may bump the compensated feedforward control signal $u_f(t)$. However, if the load signal $l_i(t)$ is differentiated or alternatively the difference taken between the current and the previous value, prior to compensation, then the steady state value is zero, and the bump is avoided. The differentiated signal may be compensated according to the compensator and the existing coefficients. The compensated feedforward control signal $u_f(t)$ is then integrated to restore the original compensation while easing in the new compensation. Differentiating and reintegrating may be done digitally by taking the difference in successive samples for each signal and summing each newly calculated feedforward control signal with the previous value. Where more than one signal is compensated, the several compensated signals may be summed or integrated as a group. An offset in the integrated value may be corrected by the feedback control. Differentiating and reintegrating are preferred aspects of the present method, but are not essential. Another solution is to recognize bumps as they occur and separately apply an offsetting value within the feedback controller.

Another problem accommodated with the implementation shown in FIG. 1 is feedback control windup. The intervening feedforward control may cause the feedback controller to misread the effect of the feedback controller, resulting in feedback windup. A cure is to back calculate the feedback effect, or otherwise separate out the feedback control effect. The combined feedforward signal is subtracted from the external actuator measurement signal $x_a$ on lead 38 to compute an external feedback signal $x_b$ on lead 36 returned to the feedback controller 26. It is part of feedback control art to provide an external feedback signal $x_b$ on lead 36 to inform the feedback controller of the true effect of the control action, so the feedback controller recognizes the physical bounds and does not integrate the compensated control signal indefinitely.

A third problem accommodated with the implementation shown in FIG. 1 is independent limiting. If the feedforward control signal is separately integrated, the reintegrated feedforward control signal $u_f(t)$ on lead 60 has no base, and drift in the absolute value of the signal may occur, ultimately causing the system to reach a physical bound. The feedback and feedforward portions may drift in opposite directions as each attempts to balance the drift. As a result, one or both of the control sections may bound needlessly. A cure is to leave the combined final control signal $v(t)$ on lead 20 unchanged, but shift between controls by biasing the feedback control signal $u_b(t)$ and oppositely biasing the feedforward control signal $u_f(t)$.

When the feedback control signal $u_b(t)$ and the resulting external feedback signal $x_b$ on lead 36 are out of bounds, the signals are adjusted to reduce the feedback control signal $u_b(t)$ and increase the feedforward signal $u_f(t)$ so the final control signal $v(t)$ is unchanged, but the feedback control signal $u_b(t)$ and the external feedback signal $x_b$ are in bounds. Where the feedback control signal $u_b(t)$ and feedforward signal $u_f(t)$ are shift adjusted, the cumulated signal values in the characterization process, stored for the adaptive calculation, should be readjusted to avoid disturbing the adaptive calculation.

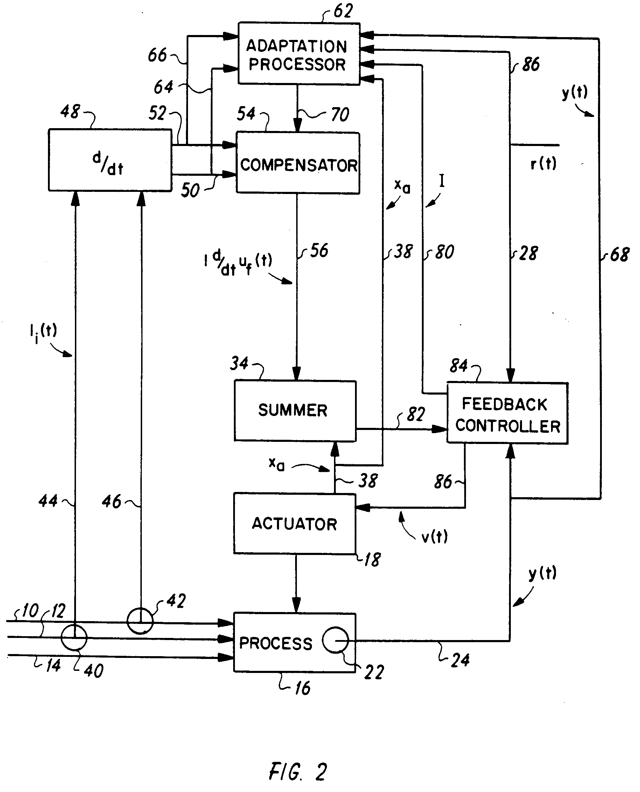

FIG. 2 shows a preferred embodiment combining feedback and feedforward to implement external feedback functions and eliminate windup and integrator drift. The structure in FIG. 2 corresponds for the most part to the structure shown in FIG. 1. The adaptation processor 62 receives the load signals $l_i(t)$, the set point signal $r(t)$ (on lead 86), and the measurement signal $y(t)$. The external actuator measurement signal $x_a$ is received on lead 38, and is used as a numeric substitute for the feedback control signal $u_b(t)$. The adaptation processor 62 additionally receives a feedback controller integral time constant, I, from a feedback controller 84 on lead 80. The integral time I is applied at a convenient point in either the adaptation processor 62 or the compensator 54 so the compensated output from compensator 54 on lead 56 comprises the product of the unintegrated feedforward control signal $d/dt\ u_f(t)$ and the integral time, I. The product, $(I)(d/dt\ u_f(t))$ is supplied on lead 56 to the summer 34, where it is added to the external actuator measurement signal $x_a$ on lead 38. The sum, $(I)(d/dt\ u_f(t)) + x_a$, is supplied on lead 82 to the feedback controller 84.

The feedback controller 84 may be one including standard hardware and processing functions to operate with proportional, integral, and derivative functions. Feedback controller 84 also receives the measurement signal $y(t)$ on lead 24, and the set point signal $r(t)$ on lead 28 as in the embodiment of FIG 1. In the preferred embodiment the feedback controller 84 partially develops a feedback control signal to a point where the unintegrated feedforward signal product and external actuator measurement sum, $(I)(d/dt\ u_f(t)) + x_a$ may be added, and the sum jointly integrated to produce the final control signal $v(t)$. The final control signal $v(t)$ is then supplied to the actuator 18 on lead 86.

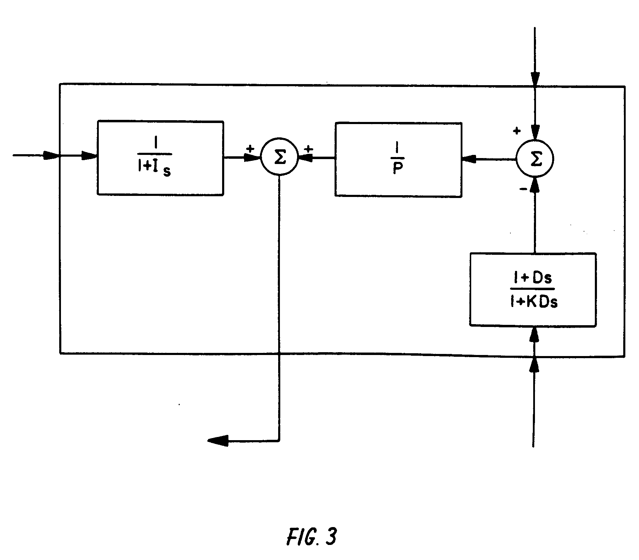

FIG. 3 shows a control diagram of the preferred combined integration of the unintegrated feedforward and feedback signals to produce an antiwindup process in the feedback controller 84. The preferred solution uses one integrator for both the feedforward and feedback control signals.

The unintegrated feedforward control signal multiplied by the integral time, combined with the external actuator measurement signal $(I)(d/dt\ u_f(t)) + x_a$ is input to a lag function block 88. The lag function block 88 lags the input sum to produce a lagged output signal on lead 90.

Simultaneously, the measurement signal $y(t)$ on lead 24 is operated on by a derivative block 92. The result is subtracted from the set point signal $r(t)$ in differencer 94. The difference is then multiplied by a proportional band block 96 to form a partially developed feedback control signal on lead 98 that does not include an integral function.

The lagged output signal on lead 90 is then combined with the partially developed feedback control signal on lead 98 in a summer 100. The sum is supplied to the actuator 18 on lead 86 as the final control signal $v(t)$.

The final control signal $v(t)$ is returned either directly or by a measurement of the response to the final control signal $v(t)$, as the external actuator measurement signal $x_a$ on lead 38. In either case, the affect of the the final control signal v(t) on lead 86, is returned on lead 38 through the summer 34 to the input of lag function 88 closing a unity gain feedback loop for integration. Integration of the feedback control signal d/dt $u_b(t)$ in effect adds a proportional signal to the integrated output to combine integration with the other existing feedback controller 84 modes. The result is to produce a final control signal v(t) on lead 86 that is the sum of the now integrated feedforward and feedback signals, $v(t) = u_f(t) + u_b(t)$ that is constrained by the actuator's limits to remain in bounds.

Differentiating the load signal followed by compensation and reintegration removes bumps from the compensation updating. Feeding back the combined feedback and feedforward signals through a lag function 40 prevents valve windup, since the bounding of the value bounds the external actuator measurement signal $x_a$ 36, thereby stopping further integration. Finally, integration occurs in one place, instead of several, thereby obviating coordinating separate integrators. The function of control integrator 20 may be merged with the feedback controller, the compensator, or the process control as is convenient. Different feedback controllers may require a different signal treatments to integrate the combination of the feedforward control signal and feedback control signals.

Turning to the function of the compensator 54, the control system samples the load signals $l_i(t)$, the measurement signal y(t), and the feedback control signal $u_b(t)$, at regular intervals. The signal samples are converted to a fixed range for calculation of 0-100%, corresponding to the ranges of the source signals. Each sampled and converted feedforward signal is applied to a corresponding compensator having a transfer function to transform the signal to a feedforward control signal component.

The compensators may be any of several commonly used elemental feedforward compensators, as the lead, lag, or deadtime compensators, or combinations thereof chosen to compensate the low frequency behavior of the process. Including higher order leads and lags may improve higher frequency dynamic control, but otherwise has no affect on important low frequency control; or the effectiveness and safety of the design. Each compensator has adjustable coefficients whose values determine a compensated output in response to the corresponding load signal $l_i(t)$ input. The proper setting of the compensator coefficients is the present objective. Compensators are presented here as a continuous transfer functions when in fact they are actually implemented as a sampled data calculations, carried out on the same or a similar schedule as the signal sampling. Continuous transfer functions are more easily discussed and while a formal statement of sampled data transfer functions is possible, it would be complex and not more enlightening.

The usual form of compensation is a simple transformation, for example $C_i = A_i L_i$, where $C_i$ is the transform of the compensated result, $A_i$ is a compensator transfer function, and $L_i$ is the transform of a load signal $l_i(t)$. Since perfect compensation is not necessary, particularly for high frequency components, the compensator design may be based on available standard compensation modules. The compensator transfer function is chosen to have a Taylor series form in the Laplace variable s, where the low order series coefficients correspond to moments of the corresponding impulse responses. The transformation from the low order Taylor series terms to the compensator coefficients must be known. For example, the compensators may include deadtimes and different combinations of leads and lags common to the art. The examples below are combinations of elemental compensators. The symbols k, T, and G are fixed compensator coefficients. A simple transfer function for deadtime is given below as a Taylor series solvable for coefficients k and T:

$$ke^{-Ts} = k\sum_{i=0}^{n}(Ts)^i/i!$$

And for the lag:

$$k/(Ts + 1) = k\sum_{i=0}^{n}(-Ts)^i$$

And for the lead lag with G a fixed ratio between lead and lag:

$$k(Ts + 1)/((T/G)s + 1) = k(1 - G)\sum_{i=0}^{n}(-Ts/G)^i$$

Quadratic denominators, as known in the art, give better high frequency noise filtering, and are preferred by applicants. Other combinations of elemental compensators are known.

Adaptation processor 62 calculates the compensator coefficients used in compensator 54. Whole or significant portions of whole transients are examined to determine the process relations. To examine whole transients, and unlike continuous adaptation schemes, the present method detects the start of a transient. Numerous possible detection triggers are available. Generally, once a signal value has reliably moved from a steady state condition, a transient is registered.

On starting, a disturbance is mathematically characterized along with the process measurement signal $y(t)$ and final control signal $v(t)$, so the three may be related. Numerous characterizations are possible, including general series characterizations as Taylor series, other polynomial series and Fourier series. Where a series form is assumed, the coefficients are all that are necessary for subsequently relating the inputs by means of a model to the results. The process of characterization is then to calculate the coefficients of a series representation of the disturbed signal, and in the preferred embodiment comprises calculating the coefficients where each coefficient corresponds to a different weighted time integral of the disturbed signal. Transfer functions may be expressed as Laplace transforms, and the Laplace transforms then expanded as a Taylor series. The Taylor series coefficients of a Laplace transform have a form similar to a moment calculation. A moment calculation on the differentiated input signals can therefore be used to develop the Taylor series coefficients, and the Taylor series coefficients transformed into compensator coefficients.

With multiple load signals and several degrees of moments, a series of equations are solved for the multiple compensation coefficients.

Applicants characterize the input process variable signals by degrees of moments. As the disturbance is running, moment calculations are performed on the differentiated signals to generate moments that are the Taylor series coefficients. Similarly, running calculations of Fourier, or other series coefficients may be made. Any number of terms may be included in the characterization. Low order terms are usually more important, and depending on the signal and the process, inclusion of high order terms increasingly represents noise features.

The system at the start of a disturbance stores for the process measurement signal $y(t)$, the final control signal $v(t)$, or alternatively, the feedback control signal $u_b(t)$, the controlled measurement signal $y(t)$, and each load signals $l_i(t)$, a set of starting steady state values, and zeros all corresponding moment data. The computation is based on the moments of the differentiated, sampled time signals, where

$$y'(t) = y(t) - y(t - 1)$$
$$v'(t) = v(t) - v(t - 1)$$
$$u_b'(t) = u_b(t) - u_b(t - 1)$$
$$l_i'(t) = l_i(t) - l_i(t - 1).$$

The signals may be transformed and expanded as a series with each series term then operated on by a moment function to yield a moment transformation series which for convenience is called simply the moments. The $n^{th}$ moments for a Laplace transform are then calculated for each sample by the expressions,

$$M_n(y') = \sum_{j=0}^{\infty} [(-j/t_c)^n/n!][y(j) - y(j-1)]$$

$$M_n(v') = \sum_{j=0}^{\infty} [(-j/t_c)^n/n!][v(j) - v(j-1)]$$

$$M_n(u_b') = \sum_{j=0}^{\infty} [(-j/t_c)^n/n!][u_b(j) - u_b(j-1)]$$

$$M_n(l_i') = \sum_{j=0}^{\infty} [(-j/t_c)^n/n!][l_i(j) - l_i(j-1)]$$

respectively, where n is a positive integer or zero for the degree of the moment and j counts the sample time from the disturbance start. The $t_c$ term is a characteristic disturbance recovery time measured in sampling intervals. The effect of characteristic loop time $t_c$ is to remove the sampling time dimension from the moments. In the first processing method the characteristic loop time is ignored, and $t_c$ is one. Where samples are taken at regular intervals, counting the samples serves as a disturbance timer. When a steady state is reached by settling, the subsequent contributions are nearly zero, so the summation need not be carried out indefinitely, but may be terminated. The moment values then characterize the disturbance. Other series representations may be similarly used. The current integrated moment values are zeroed at the start of each transient adaptation.

Again, unlike continuous adaptation schemes, the present method determines an end point to the disturbance characterization, as for example, a disturbance end. Where there is no noise in the signals, a comparison of successive signal values can indicate settling. Because of noise, applicants prefer comparing a measure of deviation of a set of values from the average of the set. Where the recent deviation is close to the recent average, the disturbance is defined as settled. One implementation uses the intermediate values of the moment calculation in double duty as part of the checking of disturbance settling.

Having the new disturbance characterizations, the transfer function relations can be updated with new coefficients. In the following discussion the relation between the inputs and process response is developed and solved for in terms of a model. In the actual device the model relation is not repeatedly solved, but the characterizing coefficients are used in the projection process to produce compensator coefficients directly. The following model discussion is an example of how a preferred model is solved. Other model relations may similarly be developed and solved where either with or without transformation the unsolved coefficients of the process inputs and outputs may be linearly related.

The preferred process transfer function model is expressed by the equation

$$Y = (V - L_u A^*_u - \Sigma_i L_i A_i^*)(A^*_m)^{-1}$$

or alternatively

$$YA^*_m = V - L_u A^*_u - \Sigma_i L_i A_i^*$$

where $Y$, $V$, $L_i$, and $L_u$ are the transforms of the measurement signal $y(t)$, final control $v(t)$, measured loads $l_i(t)$ and the unmeasured load $l_u$, and $A^*_m$, $A^*_i$ and $A^*_u$ are the ideal transfer functions of the measurement, measured load, and unmeasured loads corresponding to the actual process conditions. For convenience, the equation shown has a form for a single feedforward signal. The equation may be generalized for multiple load signals $l_i(t)$. The equation defines a process where the process measurement signal $y(t)$ is derived as a linear sum of the control signal $v(t)$, the unmeasured load signal $l_u$, and the load signal $l_i(t)$, each modified by dynamic process elements, $a_u$, $a_i$, and $a_m$ with corresponding transfer functions $A_u$, $A_i$, and $A_m$. Other models may be used where the process measurement signal $y(t)$ results from a linear sum of transformed inputs. For example the set point may be treated as an input variable.

The equation may be reexpressed in terms of the errors $E_i$, $E_m$, and $E_u$ in the model transfer functions, which are the differences between the previous solution and the current solution. The error format in effect offsets the origin of the equations which minimizes numerical errors. The error for the unmeasured disturbance is assumed to equal all of the unmeasured disturbance ($E_u = A_u$ current, $A_u = 0$ prior). The result may be arranged as:

$$V - \Sigma_i L_i A_i - YA_m = L_u E_u + YE_m + \Sigma_i L_i E_i$$

Alternatively, the term $\Sigma_i L_i A_i$ may be eliminated by including the feedforward compensations in the model:

$$U_b - YA_m = L_u E_u + YE_m + \Sigma_i L_i E_i$$

The transfer functions in each equation may be expanded as differentiated Taylor series equations in s.

$$Y'(s) = y_0 + y_1 s + y_2 s^2 \dots$$

$$U_b'(s) = u_{b0} + u_{b1}s + u_{b2}s^2 \ldots$$
$$V'(s) = v_0 + v_1 s + v_2 s^2 \ldots$$
$$L_u'(S) = l_{u0}$$

(Higher order terms for $L_u'(S)$ equal zero.)

$$L_i'(s) = l_{i0} + l_{i1}s + l_{i2}s^2 \ldots$$
$$A_i(s) = a_{i0} + a_{i1}s + a_{i2}s^2 \ldots$$
$$A_m(s) = a_{m0} + a_{m1}s + a_{m2}s^2 \ldots$$
$$E_u(s) = e_{u0} + e_{u1}s + e_{u2}s^2 \ldots$$
$$E_i(s) = e_{i0} + e_{i1}s + e_{i2}s^2 \ldots$$
$$E_m(S) = e_{m0} + e_{m1}s + e_{m2}s^2 \ldots$$

The model equation may be expanded by multiplying the terms in the Taylor series and grouping common terms. For convenience the high order terms have been truncated.

$$(v_0 - l_{i0}a_{i0} - y_0 a_{m0})$$
$$+ (v_1 - l_{i0}a_{i1} - l_{i1}a_{i0} - y_0 a_{m1} - y_1 a_{m0})s$$
$$= (l_{u0}e_{u0.} + y_0 e_{m0} + l_{i0}e_{i0}) +$$
$$(l_{u0}e_{u1} + y_0 e_{m1} + y_1 e_{m0} + l_{i0}e_{i1} + l_{i1}e_{i0})s$$

Illustrating the expansion of the model equation in terms of the series with the equation in V and truncating higher order terms:

$$(v_0 + v_1 s)$$
$$- (l_{i0} + l_{i1}s)(a_{i0} + a_{i1}s)$$
$$- (y_0 + y_1 s)(a_{m0} + a_{m1}s)$$
$$= (l_{u0})(e_{u0} + e_{u1}s)$$
$$+ (y_0 + y_1 s)(e_{m0} + e_{m1}s)$$
$$+ (l_{i0} + l_{i1}s)(e_{i0} + e_{ij}s)$$

The resulting equation may then be separated into equations from the terms having the same powers of s:

For $s^0$:

$$(v_0 - \Sigma_i l_{m0}a_{i0} - y_0 a_{m0})$$
$$= (l_{u0}e_{u0} + y_0 e_{m0} + \Sigma_i l_{i0}e_{i0})$$

For $s^1$:

$$v_1 - \Sigma_i l_{i0}a_{il} - \Sigma_i l_{i1}a_{i0} - y_0 a_{m1} - y_1 a_{m0}$$
$$= (l_{u0}e_{u1} + y_0 e_{m1}$$
$$+ y_1 e_{m0} + \Sigma_i l_{i0}e_{i1} + \Sigma_i l_{i1}e_{i0})$$

The resulting equations are not individually solved but the projection procedure described below yields solutions for the error terms $e_m$, $e_i$, and $e_u$ that offset the current solution from the next updated solution. The Taylor series coefficients ($v_0$, $y_0$, $l_{i0}$, $v_1$, $y_1$, $l_{i1}$, and so on for the remaining terms) are computed from the control signal ($v_0$, $v_1$ from v(t)), the process measurement ($y_0$, $y_1$ from y(t)), and the feedforward signals ($l_{i0}$, $l_{i1}$ from $l_i$(t)) by the earlier expressions for moments.

Once the disturbance settles, the compensator coefficients are updated. Since the model is linear, solutions may be represented as linear subspaces in a space of model coefficients. The dimension of the model space is equal to the product of the number of process variables in the chosen model, and the number of moments used in compensation In the present model, if one moment is used, there is one axis for the measurement signal, one axis for the unmeasured load and one axis for each measured load. If two moments are used, there are two axes for each signal and load. Any point in a solution subspace gives the same compensation result for one set of input conditions, for example the particular transient. For different transients, different points in a particular solution space give differing results and may not compensate well. The problem is to converge successive solutions to a point correctly compensating all conditions.

The projection method determines a single solution in a new solution space that has the least change from the existing solution. Where a load variable was not upset, the associated compensation value is not altered. Considering the axes in terms of the errors in the current solution is convenient. The current solution is then the origin of the solution space, and the new solution corresponds to the increments to be added to the current solution to generate an updated solution. For a single load, single moment system (i.e., steady state), a three dimensional space may be used with axes for the measurement error, $e_m = a^*_m - a_m$, the unmeasured load $a_u$, and a single load measurement error, $e_1 = a^*_1 - a_1$. Adding additional loads adds additional error axes corresponding to $e_i = a^*_i - a_i$. Adding additional moments multiplies the number of axes. The solution space is the plane determined by the selected model relation, or as used here the equation:

$$v_0 - l_{i0}a_{i0} - y_0 a_{m0} = l_{u0}a_{u0} + l_{i0}e_{i0} + y_0 e_{m0}$$

An updated solution in the error space is computed by projecting from the previous solution $(0, 0, 0)$ to the nearest solution of the equation being solved. The nearest solution is the point $(a_{uo}, e_{io}, e_{mo})$ computed by standard means as:

$$a_u = \frac{l_{u0}(v_0 - l_{i0}a_{i0} - y a_{m0})}{(l_{u0})^2 + (l_{i0})^2 + (y_0)^2}$$

$$e_i = \frac{l_{i0}(v_0 - l_{i0}a_{i0} - y_0 a_{m0})}{(l_{u0})^2 + (l_{i0})^2 + (y_0)^2}$$

$$e_m = \frac{l_{m0}(v_0 - l_{i0}a_{i0} - y_0 a_{m0})}{(l_{u0})^2 + (l_{i0})^2 + (y_0)^2}$$

The error computations define the update values for the compensator moments. The set of solutions for one moment, and multiple loads, can be recast in vector form with the following vector definitions:

$E = [e_{10}, e_{20}, e_{30}, ..., e_{m0}]^T$
$U = [v_0 - (l_{10}a_{10} + l_{20}a_{20} + l_{30}a_{30} + ...) - y_0 a_{m0}]$
$B = [l_{u0}, l_{10}, l_{20}, l_{30}, ..., y_0]^T$
$H = [l_{10}, l_{20}, l_{30}, ..., y_0]^T$

With these definitions the previous solution calculations can be restated as the single vector equation:

$E = H(B^TB)^{-1}U$

The updated solution $(a_u, e_i, e_m)$ is closer to or the same distance from the ideal value $(a_u^*, e_i^*, e_m^*)$ than the prior solution $(0,0,0)$. If the prior solution is in the same solution subspace as the present equation, the solution point may not be closer to the ideal solution, but the associated control is equivalent. The method gives a solution even though there may be fewer equations than unknowns. The new solution affects only the compensator values of the process variables affected by the disturbance, and the magnitude of the change is least when the data least justifies change. For a system having additional loads, additional axes are added but the procedure remains the same.

Where additional moments are considered, solution subspaces are generated for each moment. Each moment equation defines a subspace of one dimension less than the parameter space. Since there are more parameters than moments, the dimension of moment solution space is less than the dimension of the parameter space.

The preferred design takes the equation for the $s^0$ terms:

$$(v_0 - (l_{10}a_{10} + ...) - y_0 a_{m0}) = (l_{u0}e_{u0} + y_0 e_{m0} + (l_{10}e_{10} + ...))$$

To this is added the additional equation the $s^1$ terms:

$$(v_1 - (l_{10}a_{11} + ...) - (l_{11}a_{10}...) - y_0 a_{m1} - y_1 a_{m0}) =$$
$$(l_{u0}e_{u1} + y_0 e_{m1} + y_1 e_{m0} + (l_{10}e_{11} + ...) + (l_{11}e_{10} + ...)$$

If additional moments are computed the corresponding additional equations are included. In the preferred method, the solution is found by projecting from the error space origin to the nearest point in the subspace formed by intersection of the two or more equations.

The error vector E has dimension one by the number of loads $l_i(t)$ plus one, the measurement, times the number of moments. $(1 \times (l_i + 1)(m))$

$$E = [e_{10}, e_{20}, e_{30}, ..., e_m, e_{11}, e_{21}, e_{31}, ..., e_{m1}]^T$$

The vector U has dimension one by the number of moments $(1 \times m)$.

$$U = [v_0 - (\sum_{i=0}^{n} l_{i0}a_{i0}) - Y_0 a_{m0},$$
$$v_1 - (\sum_{i=0}^{n} l_{i0}a_{i1}) - Y_0 a_{m1}$$
$$- (\sum_{i=0}^{n} l_{i1}a_{i0}) - Y_1 a_{m0}]^T$$

The array B has dimension of moments by the number of loads plus two (one for the unmeasured load $l_{u0}$), and one for the measurement, times the number of moments $(m)(n + 2)$ where n is the number of measured disturbances $l_i(t)$.

$$B = \begin{bmatrix} l_{u0}, l_{10}, l_{20}, l_{30}, \cdots & Y_0, & 0, & 0, & 0, & 0, ..., 0 \\ 0, l_{11}, l_{21}, l_{31}, \cdots & Y_1, l_{u0}, l_{10}, l_{20}, l_{30}, \cdots, Y_0 \end{bmatrix}^T$$

The array H has dimension of moments by the loads plus one for the measurement, times the moment $(m) \times (l_i(t) + 1)(m)$.

$$H = \begin{bmatrix} l_{10}, & l_{20}, & l_{30}, & \cdots, & Y_0, & 0, & 0, & 0, & ..., 0 \\ l_{11}, & l_{21}, & l_{31}, & \cdots, & Y_1, & l_{10}, & l_{20}, & l_{30}, & \cdots, Y_0 \end{bmatrix}^T$$

With the matrix definitions, the solution calculations can be stated with the same algebraic form but the symbols representing vectors and matrices:

$$E = H(B^T B)^{-1} U$$

If more than two moments are addressed, the matrix equations are extended with additional columns: the matrices B and U have one column for each equation to be solved; one column for each level of moment calculated. If more than one feedforward signal is accommodated the effect is to introduce a number of unknowns equal to the product of the number of levels of moments calculated times the quantity two plus the number of feedforward signals.

Applicants prefer a two moment space which gives the following specific projection calculations resulting from the model solution developed. The terms on the right side are all calculated directly from the moments of the signals.

a. computing $S_0$, $S_1$, $S_{01}$, and Del by the equations:

$$S_0 = \Sigma_i((I_{i0})^2) + (y_0)^2 + (I_{u0})^2$$
$$S_1 = \Sigma_i((I_{i1})^2) + (y_1)^2$$
$$S_{01} = \Sigma_i((I_{i0})(I_{i1})) + (y_0)(y_1)$$

$$\texttt{Del} = S_0^2 + (S_0 S_1 + (S_{01})^2)$$

b. computing adjusted control signal moments, $U_0$, $U_1$, by the equations:

$$U_0 = v_0 - \Sigma_i(I_{i0}a_{i0}) - y_0 a_{m0}$$
$$U_1 = v_1 - \Sigma_i(I_{i0}a_{i1} + I_{i1}a_{i0}) - y_0 a_{m1} - y_1 a_{m0}$$

c. computing adaptation coeficients, $b_0$, $b_1$, by the equations:

$$b_0 = [(S_0 + S_1)U_0 - S_{01}U_1]/\text{Del}$$
$$b_1 = (S_0 U_1 - S_{01}U_0)/\text{Del}$$

d. computing for each feedforward compensator the compensator coefficients, $a_{i0}$, $a_{i1}$, by the equations:

$$a_{i0} = a_{i0} + b_0 I_{i0} + b_1 I_{i1}$$
$$a_{i1} = a_{i1} + b_1 I_{i0}$$

e. computing, for the next adaptation, the inverse process, $a_{m0}$, $a_{m1}$, by the equations:

$$a_{m0} = a_{m0} + b_0 y_0 + b_1 y_1$$
$$a_{m1} = a_{m1} + b_1 y_0$$

f. computing, from each pair of compensator moments corresponding compensator parameters for the compensator transfer function, for example a lead lag compensator with coefficients $a_{i0}$ and $a_{i1}$

$$k(Ts + 1)/((TGs + 1))$$
$$= k(Ts + 1)/((T/G)s + 1)$$
$$= k + k(I - G)(-Ts/G) \ldots + k(I - G)(-Ts/G)^n$$
$$= a_{i0} + a_{i1}t_c s \ldots$$

(expressed with the Taylor Series), and a fixed lead lag ratio G, by the equations:

$$k = a_{i0}$$
$$T = -a_{i1}t_c G/[k(G - 1)]$$

If the process dynamic mismatch is predominantly delay, T is usually set to zero, since a lead cannot cancel delay.

Other solution points may be selected. The previous solution space may be retained, and a point in the intersection between the current and previous solution spaces used as the new solution. The nearest intersection point is preferred but a vector combination of the nearest intersection point and the current solution point is also acceptable. Where no intersection occurred, the nearest point projection may be used. Where numerous adaption calculations have been completed, there is reason to feel the most current solution may reflect noise features. A possible solution is to take a weighted portion of the previous solutions and add the projected solution so the weighted previous solution becomes more dominant. Generally, selecting a weighted vector combination of the current, and previous solutions is considered in the skill of those practicing the art, given the present disclosure.

The unmeasured load signal occupies a special role in the design. The explicit identification of an unmeasured load disturbance is unusual in adaptive Systems. Specifically including a parameter in the process model for unmeasured load effects, improves the accurate determination of the remaining parameters, since error is not falsely allocated to the measured loads. Another benefit involves the projection method. The projection method tends to converge slowly when successive model equations derived from sample data are similar, as for example with successive data samples where values have changed only slightly which is typical of continuous adaptive methods.

The unmeasured load $l_u$ derivative is treated as an impulse, with area $l_{u0}$, occurring at the start of the disturbance, and operated on by a corresponding ideal unmeasured load compensator $A_u$. The unmeasured load signal's low order term, $l_{u0}$ is set as a constant representing the likely magnitude of unmeasured disturbances. The value of the unmeasured load $l_{u0}$ may then be chosen to be the same as the noise threshold used to detect a measured disturbance. The higher order terms of the unmeasured load signal $l_u$ are set to zero $l_{ui} = 0$.

While the unmeasured load $l_u$ in the model formally represents an unmeasured disturbance load, in the projection process, the unmeasured disturbance load $l_u$ controls the rate of adaptation. A small value of $l_{u0}$, for example a value smaller than the average actual low order terms of the measured loads $l_{i0}$, means most of the disturbance is attributed to the measured loads and little is attributed to unmeasured causes. The result is nearly a complete adaptation within one disturbance, but at a cost of excess sensitivity to noise. A large value of $l_{u0}$, for example a value larger than than the average actual low order terms of the measured loads $l_{i0}$, means most of the disturbance is attributed to the unmeasured load and little is attributed to the measured causes. The adaptation as a result slows, needing many disturbances to settle, but the resulting adaptation is a conservative average of the many disturbances.

The process model may be expressed alternatively in terms of the feedback control signal $u_b(t)$ instead of the final control signal $v(t)$, and the corresponding Taylor series or moment equations develop similarly. When expressed in terms of the feedback signal $u_b$, the compensation is assumed to be used, and therefore the process control 18 does not saturate. In either case, the computation includes a number of moments for each signal equal to the number of dynamic compensation coefficients to be adapted in each compensator transfer function.

The control affect of the unmeasured load value $l_{u0}$ can be illustrated where the steady state feedforward control with multiple disturbances the solution takes the form:

$$e_{i0} = \frac{l_{i0}[V - (a_{10}l_{10} + a_{20}l_{20} + \cdots) - a_{m0}y_0]}{l_{u0}^2 + (l_{10}^2 + l_{20}^2 + \cdots) + y_0^2]}$$

The effect of large and small values for the measured loads $l_{i0}$ and the unmeasured load $l_{u0}$ may be compared in the equation. If unmeasured load $l_{u0}$ is small compared to measured loads $l_{i0}$, then adaptation of $l_{i0}$ is relatively independent of the unmeasured load $l_{u0}$. If the unmeasured load $l_{u0}$ is large compared to $l_{i0}$ then adaptation of $l_{i0}$ slowed. Thus if the unmeasured load $l_{u0}$ is set to correspond to small but significant unmeasured disturbances then adaptation stops when $l_{i0}$ is zero, proceeds slowly when $l_{i0}$ is significant but small, and proceeds rapidly if $l_{i0}$ is large. The preferred setting for unmeasured load constant $l_{u0}$ is then a value greater than the expected signal noise, and less than signal variations deemed significant. Setting $l_{u0}$ to the noise threshold is preferred. An enhancement is to calculate a value for the unmeasured load constant $l_{u0}$ from signal statistics or from convergence methods. The action of unmeasured load value $l_{u0}$ is essentially unchanged when higher moments are included.

The projection method calculates the smallest sum of weighted squared changes in the model parameters satisfying the $s^0$ and $s^1$ model equations relating the inputs and outputs. The zeroth terms for the unmeasured load $l_{u0}$, process measurement $y_0$, final control signal $v_0$, feedforward disturbances $l_{i0}$, and are measured as a percentage of full scale signal so are dimensionless. The corresponding zeroth

compensation coefficients $a_{i0}$, $a_{m0}$ and $a_{u0}$ are also dimensionless. The higher order series terms, the first and subsequent compensator terms, have been normalized with a time factor $t_c$, a characteristic recovery time for the closed loop. The time factor $t_c$ affects the the distance measure in the parameter space and therefore the rate of convergence of the projection method.

Typically, the absolute value of the feedback compensation coefficient $a_{m0}$ lies in a range from zero, for a dominant lag process, to one, for a dominant delay process. The scale factors for the final control signal $y(t)$ and the measured loads $l_i(t)$ are likely to be chosen so the scaled final control signal $v(t)$, change is not greater than the scaled change in the disturbance variable $l_i(t)$, which implies a compensator coefficient value, $a_{m0}$, between -1 and 1. The time factor $t_c$ should be chosen so the higher order compensation coefficients $a_{m1}$, $a_{i1}$ and $a_{u1}$ and above fall in a similar range. Numerically, the normalizing time constant is chosen to scale terms to be close to one So a change of a given magnitude in any one of the coefficients causes a comparable change in the $s^0$ and $s^1$ equations. A useful time constant is the closed loop characteristic time, $t_c$ of the feedback control.

The closed loop characteristic time is the coefficient of the $s^1$ term in the closed loop characteristic equation (the denominator of the closed loop transfer function).

For the closed loop process without disturbances:

$$u = (a_{m0} + a_{m1}s...)y$$

For a typical PID controller

$$u = (1/(Is) + 1)(1/P)[r(t) - \frac{(1 + (1 + f)Ds)y(t)}{1 + fDs + (fDs)^2}]$$

where:

u =      feedback controller output
r(t) =      set point
y(t) =      measurement
I =      integral time
D =      derivative time
f =      derivative filter factor, typically .1
P =      proportional band

solving for the measurement y by eliminating feedback output u gives:

$$y = \frac{(1 + Is)r}{[1 + (I(1 + Pa_{m0}) + D)s + ... ]}$$

The closed loop characteristic time is then

$$t_c = I(1 + Pa_{mo}) + D$$

Feedback controllers may be parameterized differently requiring a different calculation to achieve the closed loop characteristic time. Time scaling is not necessary but preferred as scaling helps speed convergence.

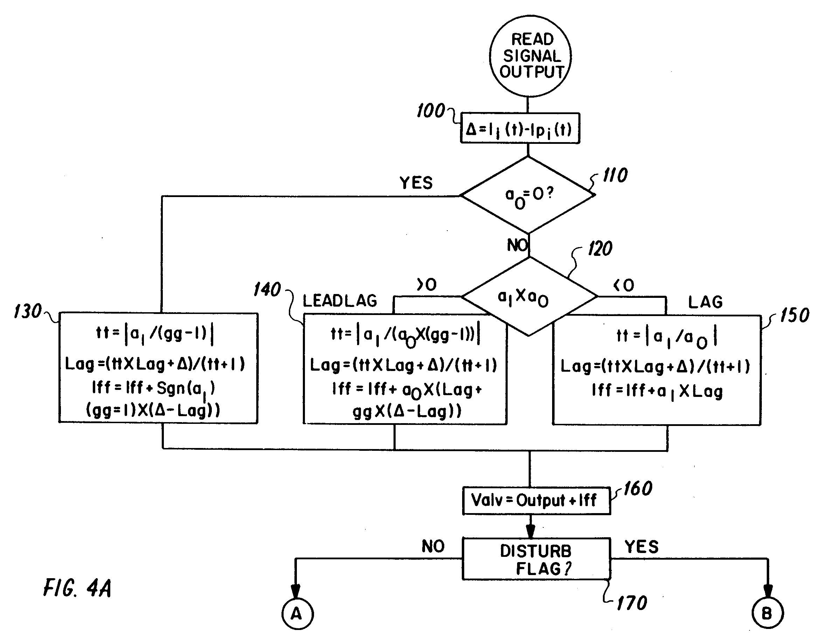

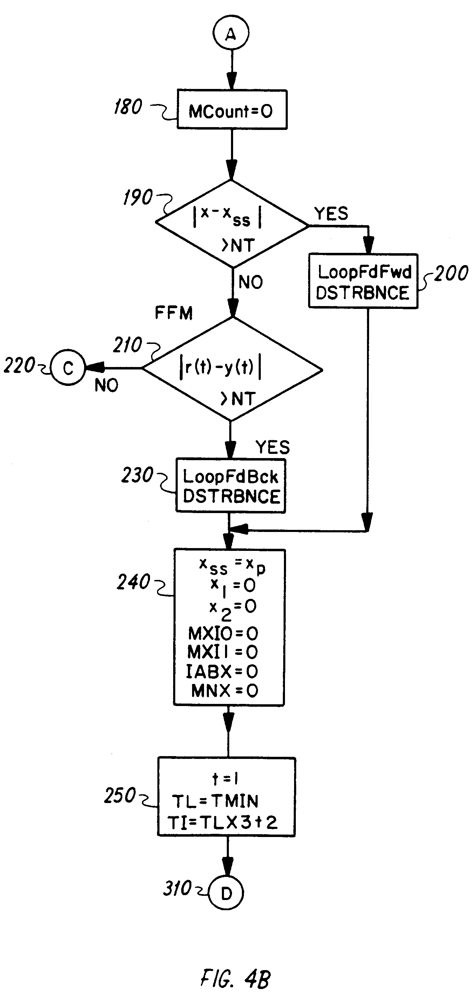

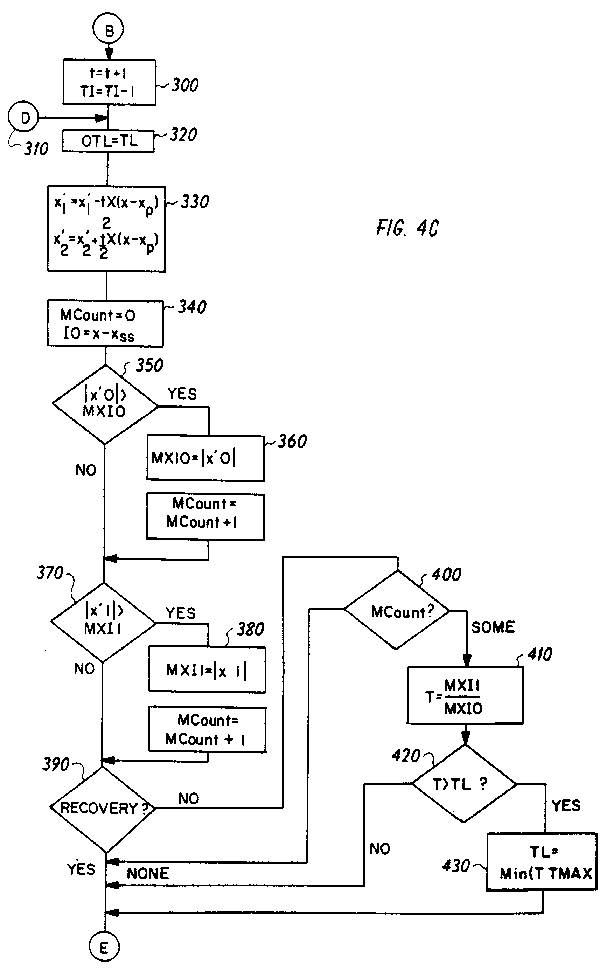

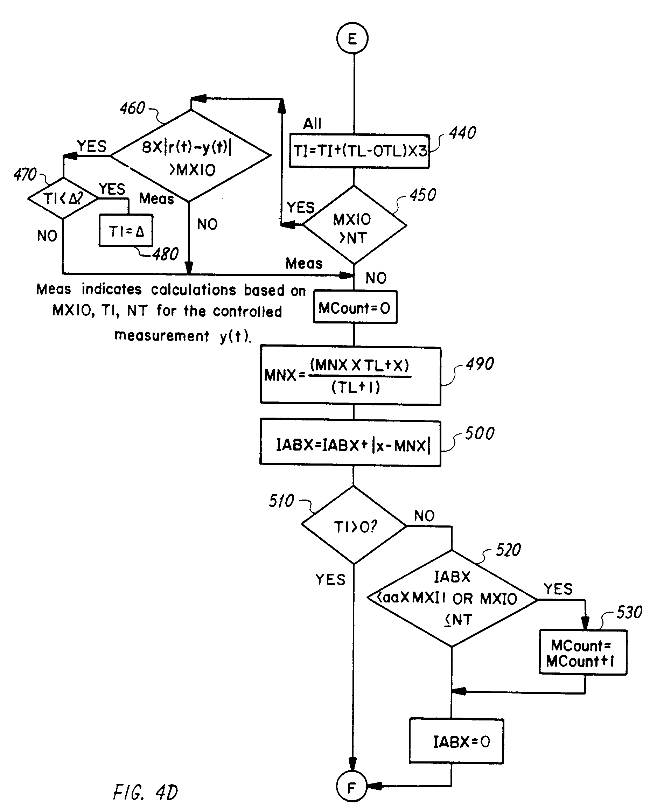

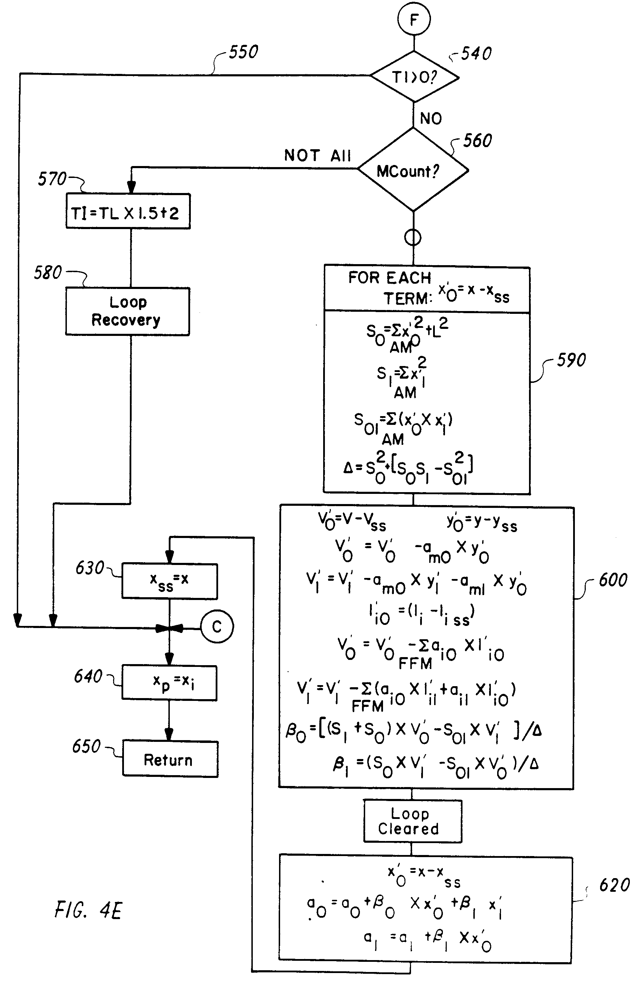

FIGs. 4a-e show a flow chart of one embodiment, a first process for compensating load signals and generating the compensation coefficients $a_{ij}$ from the load signals $l_i(t)$. The embodiment of FIG. 4 is directed at the structure shown in FIG. 1 where the feedback and feedforward components are substantially independent. At a rate consistent with capturing the process dynamics, one value from each feedforward sensor, and the feedback controller are read in sequence at the beginning of each time sample. All the signals are treated alike, except as noted, and for convenience are referenced as 'x' in the following.

The feedforward compensation is executed using the current compensator coefficients to counteract the current load disturbances according to known compensation methods. First, the difference between the current signal value and the previous value is computed 100. Since the sampling rate is assumed to be constant, the difference between successive values is proportional to the estimated derivative of the signal $x' = x(t)-x(t-1)$. Tests 110, 120 of the current signal's compensation coefficients $a_0$, $a_1$ are made to select a lag 130, lead lag 140 or derivative 150 compensator for the signal depending on which fits the data. The signal compensation is then computed 160. The following example method uses preferred compensators using the zeroth $a_0$ and first $a_1$ moments and a proportioning constant G. Each of the compensators incorporates a second order Butterworth filter to minimize high frequency noise at the feedback controller output. The constant G determines the ratio between the lead and lag contributions, and normally ranges from two to ten with four the preferred value. If additional moments are calculated, the lead and lag can be computed separately. If the first moment is zero, then a derivative/lag is calculated 130 by first calculating the lag as

$$ \texttt{lag} = \frac{|a_1/(G-1)|*\texttt{lag} + (x')}{(|a_1 1/(G-1)| + 1)} $$

The reintegrated feedforward component $C_i$ corresponding to a transfer function $((Ts/(TGs + 1))$ applied to the load signal $l_i(t)$, has a program value calculated as

$C_i = Sgn(a_1)(G - 1)((x') - lag) + C_i$

If the product of the zeroth $a_0$ and first $a_1$ moments is positive then, a lead lag compensator corresponding to $k(Ts + 1)/(TGs + 1)$ with k, T being adapted, and G fixed, is used computed 140 as:

$$ \texttt{lag} = \frac{|a_1/(a_0*(G-1))|*\texttt{lag} + (x')}{(|a_1/(a_0 *(G-1))| + 1} $$

and the reintegrated feedforward component $C_i$ of the load signal $l_i(t)$ is

$C_i = a_0(lag * G(x' - lag)) + C_i$

If the moment product is negative, then a lag compensator corresponding to $k/(Ts + 1)$ is used, computed 150 as:

$$ \texttt{lag} = \frac{|a_1/a_0|*\texttt{lag} + (x')}{|a_1/a_0| + 1} $$

and the reintegrated feedforward component $C_i$ of the load signal $l_i(t)$ is

$C_i = a_0*lag + C_i$

The compensated signals are cumulated with the feedback output and issued as the final control signal to the process control device (not shown).

In sequence with the compensation, an adaptation procedure occurs using the same signal values for the current time samples. Broadly, the adaptation procedure has two states of operation. In the first state, disturbance seeking, the load and set point signals are continually examined for a disturbance Fig. 4b. If no disturbance is detected, the compensation process continues unchanged with each successive sample compensated with the existing coefficients and the resulting control signal issued. If a disturbance is detected then a second state is entered where the disturbance is characterized by a moment series representation Figs. 4c-e. The disturbance characterization process continues concurrently with compensation on subsequent sample values until an end condition, as the settling of the disturbance or exceeding of

17

boundary conditions is determined. Once the disturbance characterization process ends, the disturbance characterization is used to update the compensation coefficients, and the disturbance seeking process restarts. After the compensated control signal is issued, a test is made to determine whether disturbance seeking or characterization is the current state 170.

A disturbance is noted on a load when the measurement moves outside an encompassing set of steady state values for the load. Examining the current load value, as against fixed limits is the simplest check for a disturbance, and in an actual embodiment each load is examined in sequence to see if the load is outside a defined zone. The steady state zone covers a noise band about a currently fixed value which in the actual embodiment is the previous settled value. If any load value $l_i(t)$ or set point signal $r(t)$ falls outside the associated limit zone, a disturbance is registered. Other disturbance measures may be used. In particular, any level of differentiation or integration of a load signal may be used and compared against set boundary values. Thus the rates of signal change, or offsets from a set value may signal an upset. Also, the boundary zone values may be changed as successive disturbances are adapted, so for example the adaptation process may start when the current disturbance exceeds a large previous disturbance or a portion of a previous disturbance. The boundary values may also be altered as a function of the error values used to adjust the compensator terms, or according to running statistical measures of noise.

In the first process, a test for a feedback disturbance is made 170, and a flag set accordingly. Where there is only a feedback disturbance as in a set point $r(t)$ change, only feedback control is used to reset the valve position, and feedforward adaptation may be disabled. Where there is only a feedforward disturbance or where both a feedforward and a feedback disturbance exist, the feedback controller gain may be lowered, and the feedforward adaptation made. The strategy is to not have the feedback and feedforward controllers work in opposition.

For the disturbance seeking state, a disturbance counter is zeroed 180, and all loads are tested for disturbance. The difference between the current value X and the previous steady state value $X_{ss}$ is taken and compared with a noise threshold NT 190. If the difference exceeds the noise level for that load, then a disturbance is counted. If no feedforward disturbance is found, the difference between the set point signal r-(t), and the process y(t) is compared with a limit NT to detect a feedback disturbance 210. If after examining all loads $l_i(t)$ and the difference between the set point $r(t)$ and measurement signal y(t), and no disturbance is found; then the next sample is sought, and disturbance seeking continues 220.

Once a feedforward disturbance is recognized, the disturbance state flag is set 200, and the steady state load signal $X_{ss}$ measurements are reset to the current values $X_p$ for use in the moment calculation. Disturbance characterizations for each signal are cleared of old values. The first and second moment values X'1, X'2 for each signal are zeroed. The maximum zeroth and first moments MXI0, MXI1 for each load are zeroed. In the present process, disturbances are divided into segments and several segment related values are calculated. In disturbance initialization, the segment integrated absolute value of the first moment, IABX and mean value of the first moment MNX for the current segment of each load are initialized 240.

As part of characterizing a disturbance and recognizing disturbance settling, several clocks are first initialized 230. One clock times the disturbance from the start of the first load disturbance to the end of the last load settling as t. The disturbance timer t is initialized to one. A second clock gives an estimate TL of the likely disturbance duration, and is initially set to a minimum value TMIN. Another clock, times down for each load the current segment time as a segment time TI, and is initially set by a formula as a multiple of the minimum time plus a base value. Applicants use the formula TI = TL*3 + 2. The subsequent incoming load samples are now processed for moment values Fig. 4c, 310.

Once a disturbance is detected the problem is to determine when to stop characterizing the signals. The settling of the signal is a preferred cutoff point. Where the signal is smooth and the disturbance end is abrupt, settling is easily detected by comparing successive sample points. Where the signal is noisy or varies slowly with reference to the sample rate, detecting a disturbance end is difficult. Applicants, in this first method, accommodate noise by considering developing segments of the disturbance comprising multiple samples. Averaged, filtered or otherwise smoothed values are compared instead of single points. The problem is to determine how long to make the segment. Using the smoothed segment values, the disturbance end is determined when the deviation from the average is less than a value which may be fixed or related to the disturbance size. Other tests for low frequency variability or steady state conditions may be used. An initial segment length TL is estimated by a supplied constant TMIN. The estimated disturbance length TL, is subsequently calculated during the first segment. In the preferred embodiment the disturbance estimate TL is set as the largest time integral of the load signals $l_i(t)$ divided by the largest value of the load signal $l_i(t)$. The integral divided by the value yields an abstract pulse width time that is natural to the process. The estimated length TL is tested with successive samples and expanded when the current estimate exceeds the previous estimate. Limits are placed on the minimum and maximum values to prevent runaway conditions.

The test for settling is not easily made where a system includes noise; upsets are of unknown size, shape and duration, and may include multiple upsets in sequence. All values are tested to be within steady state zones for an appropriate interval or rest period. The rest period may be either a fixed period or a function of the active period. Applicants choose to relate the segment length TL and rest period. As the disturbance grows during the first segment, the estimated segment time TL and settling period TI expand Correspondingly even while a current segment is being clocked.

If the disturbance was detected on a previous sample, so the disturbance flag is set and the clocks previously initialized, the clock time t is incremented, and the time to settle TI is decremented Fig. 4c, 300. The current segment estimate TL is temporarily preserved as an old segment estimate OTL 320. A disturbance time from the previous disturbance may be used, or one may be generated for each load signal, but generating the segment estimate TL from the currently running disturbance, which may be longer or shorter than the previous value, is preferred.

The segment estimate TL should correspond approximately to the estimated duration of a typical disturbance for the load being examined. Where the segment estimate TL is too long, several disturbance times too long, the adaptation may inaccurately include settled values. Likewise, if the segment estimate TL is too short, part of the disturbance data may be ignored. Capturing the disturbance time by the segment time estimate TL accurately is useful, but not necessary. The segment estimate TL is adapted to fairly capture a useful portion of the disturbance. Errors in the disturbance capture, result in compensation errors, but are not unstable and do converge to useful values with successive disturbances.

During a disturbance, for each sample, the first and second moments of each load signal derivative are determined 330. The second moment is computed for check purposes and is not needed in the final linear model of the transfer function. If higher order models are desirable, calculation of higher order moments may be pursued.

The current moment values for each load signal are updated. The zeroth moment may be calculated as the difference between the initial steady state and final steady state values, so updating may be postponed until the disturbance ends. The first moment $I_1$ is the integral of the first derivative of the load times the disturbance time t. The integrated moment may be calculated by the iterative sum

$$I_1 = I_1 + -t)(X - X_p)$$

where X is the current value of an input signal, and $X_p$ is the previous value. The first moment of the derivative is the net area in a time period between the function and the function's final value.

The second moment may be similarly calculated as the integral of the disturbance time squared and divided by two, all times the load value difference, or

$$I_2 = I_2 + (-t)^2(X - X_p)/2$$

The successive higher order terms or $n^{th}$ moments may be similarly calculated as the iterative sum:

$$I_n = I_n + (-t)^n(X - X_p)/n!$$

Other moment calculation forms are possible, and they are broadly interchangeable Conceptually, the shape of the disturbance is being captured with a series representation where a term of a particular order corresponds to the frequency variation of the same order, here by the moment values. The more moments used, the clearer the load disturbance shape is defined, but note that each moment is the exact moment representation of the disturbance and therefore locates the exact value of the disturbance in a moment definition space. Low order moments characterize the stronger aspects of the disturbance. Less important, high order moments are left out, making the disturbance characterization only somewhat inexact. Use of high order terms may improperly attempt to adapt noise, or cancel dead time, so limiting terms to those corresponding to significant, low order affects is preferred.

During the current disturbance the maximum factors used to determine the segment estimate TL are looked for and retained. The estimate is also checked to be within a maximum limit to prevent possible runaway processing.

The zeroth moment for each segment of the load signal is calculated as the difference between the current value, and the previous steady state value, $I_0 = X - X_{ss}$ 340. The maximum zeroth and first moments are retained. If the absolute value of the zeroth moment $I_0$ at the current sample time exceeds the previous maximum MXI0 350 then, the maximum MXI0 is updated 360. Similarly the first and any other higher order moment maximums used to calculate the time scale, or settling, exceed the previous maximum 370 for that higher moment then the corresponding maximum is updated 380.

At the end of the current disturbance estimate 390, if one of the moment maximums has been updated 400, then the segment estimate TL is recalculated. The segment estimate TL is calculated as the largest ratio of the first moment maximum MXI1 to the zeroth moment of the current segment MXI0 410. Functionally, the time calculation uses the time integral of the disturbance divided by the maximum value difference to define a square wave pulse width time T. The pulse width time T may be factored, and other similar pulse width times may be used to relate the segment estimate TL to the current disturbance. Generally, where a series in powers of time characterizes the load signal, the ratio of successive series terms may be used to generate a natural time scale.

If the newly calculated segment estimate TL exceeds the previous segment estimate OTL 420, then the segment estimate TL is updated, provided the updated value is less than a maximum TMAX 430.

The developing disturbance may redefine the pulse width estimate of the segment time TL, during the last sample. Therefore the settling time TI is readjusted after all the moment values are calculated 440. Applicants compute the growth in the disturbance estimate as the difference between current segment estimate TL and the previous segment estimate OTL and multiply the difference by a tail factor used to capture the tail portions of the disturbance. The disturbance growth is then added to the settling time TI. For the first segment, the tail factor is set large where the pulse is unknown, but is reset downwards during later segments as the pulse becomes known. The settling tail factor determines how long a period in terms of the segment estimate TL after the estimated disturbance is included to assure settling. The settling factor may range from two to four The settling time TI then expands as the load disturbances develop in the first segment. Once the load disturbances begin settling in later segments, the pulse width definition stabilizes with the largest load disturbance approximately equal to the pulse width.

The maximum zeroth moment measurement MXI0 is tested 450. If the value exceeds a noise threshold NT, a disturbance is indicated. If a disturbance is indicated and the absolute difference between the set point signal r(t) and the measurement signal y(t) 460 exceeds a moderate proportion of the maximum first moment MXI0 then the disturbance uses feedback control. If feedback control is used and the estimated settling time TI is less than a minimal settling period 470, then the settling period TI is reset to a minimal settling period 480. Numerous other predictions based on recognized signal patterns may be inserted to adjust the segment estimate TL, and settling time TI.

Once a disturbance is detected, the disturbance characterization process runs until an end condition for each disturbance has been registered. The method is to look for load upsets that are whole events and is not to continuously adapt noisy signals. The preferred end condition is for all sensor values to settle or return to steady state zones.

A filtered valuation MNX of the current segment estimate TL is computed by multiplying a current valuation MNX by the segment estimate TL and adding the current signal value X and dividing by the segment time TL plus one 490. The filter is then a running average of the signal value. The absolute difference between the average value and the current value is then integrated 500 as a iterative sum:

$$IABX = IABX + |X - MNX|$$

Each of the signals is tested for completion of settling by checking if the settling time TI has counted down 510. If the settling time TI is not complete, the disturbance is not counted as complete. If the settling time TI has run down, tests are made that the signal is actually settled 520, in which case the signal is counted as settled 530. If the mean integrated absolute value of the signal, IABX is less than a small portion (aa) of the maximum value of the signal's first moment during the disturbance, then the signal can be considered settled NT 520. If the maximum zeroth moment MXI0 for the signal is less than a noise threshold 520, then the signal was not disturbed and can also be counted as settled. The settled signal is then counted 530.

If one of the signals has not settled during the segment Fig. 4e, 540, the present sample values are saved 640 for the next sample calculations, and the next samples are retrieved 650.

If the settling time TI has timed out 540, but not all of the signals have settled 560, a new segment is started. The settling time TI is expanded 570 to a factor times the segment estimate TL plus a minimum, TI = (1.5)TL + 2, to clock another interval. A flag is set 580 to indicate a disturbance is being processed. The current signal values X are stored as the previous values $X_p$ in anticipation of reading new sample values 640. Return to the compensation process occurs to gather the next sample values 650.

Once the disturbed variables settle, adaptation update takes place. The projection method is used to regressively calculate the parameters relating final control signal v(t), controlled measurement signal y(t), the n feedforward measurements $l_i(t)$, and an assumed impulsive unmeasured load $l_u$. The first m, the number of moments, coefficients in the Taylor Series (terms $s^0$ through $s^{m-1}$) for Laplace transformed model error are forced to zero. Since there are fewer constraint equations, m, than unknowns $m(n+2)$, an m dimensional subspace of the $m(n+2)$ dimensional parameter space exists containing acceptable solutions.

The projection method locates among the set of newly determined solutions, the one closest to the previous solution For the model used here, and with two moments, the adaptation process is reduced to three general steps. Preliminary coefficients which are used repeatedly are calculated in a set up block 590. Final coefficients are calculated from the preliminary coefficients in an adapt block 600. The final coefficients are then used to generate the actual updated compensator values for each load signal $l_i(t)$ 620.

Preliminary coefficients are generated as follows:

1) The current zeroth moment $l_0$ is calculated as the difference between the initial and final steady state load values

$$l_0 = X - X_{ss}$$

2) The sum over all measurements of the squares of the zeroth moment of each measurement is computed

$$S_0 = \sum_i l_{io}^2 + y_0^2 + l_{uo}^2$$

3) The sum over all measurements of the squares of the first moment of each measurement is computed

$$S_1 = \sum_i l_{i1}^2 + y_1^2 + l_{u1}^2$$

4) The sum over all loads of the products of the zeroth and first moment of each load is computed

$$S_{01} = \sum_i (l_{i0})(l_{i1}) + (y_0)(y_1)$$

5) The determinant DET is then computed as follows

$$DET = S_0^2 + [S_0 S_1 - S_{01}^2]$$

The compensated control signal output $V_0$, $V_1$ is calculated 600 as

$$V_0 = v_0 + \sum_i l_{i0} a_{i0} + y_0 a_{m0}$$

Where $v_0$ is the difference between the current and steady state values of the final control V, $l_{i0}$ is the difference between the current and steady state values of the load signal, $a_{i0}$ is the previous compensation value, $y_0$ is the difference between the current and steady state measurement signals and $a_{m0}$ is the previous measurement compensation value. This is not a multiplication, but displays an operation formulation.

The first moment of the compensated control output $V_1$ is calculated 600 as

$$V_1 = v_1 + \sum_i (l_{i0} a_{i1} + l_{i1} a_{i0}) + y_0 a_{m1} - y_1 a_{m0}$$

is the first moment of the measurement signal, $a_{1m}$ is the existing model coefficient for the measurement's first moment, and the other terms are as defined above.

Using the previously calculated values the first adaptation coefficient is set as

$B_0 = [(S_1 + S_0) * V_0 - S_{01} * V_1]/ DET$

The second adaptation coefficient is set as

$$B_1 = (S_0^2 * V_1 - S_{01} * V_0)/DET.$$

Adaptation of the compensation coefficients is now executed 620. For each load signal the zeroth and first coefficients are calculated as

$I_0 = I - I_{ss}$
$a_{i0} = a_{i0} + B_0 * I_{i0} + B_1 * I_{i1}$
$a_{i1} = a_{i1} + B_1 * I_{i0}$

The steady state values $x_{ss}$ are updated with the current process values $x_i$ 640, and the start of the process is returned to 650. Readaptation occurs with the replacement of old model coefficients with new ones and then generating the compensator coefficients:

$k = a_{io}$
$T = -a_{i1}G/(k(G - 1))$

Control now proceeds (FIG. 4a) with the updated, model values reflecting the information gathered from the just ended disturbance. The updated compensation values are used until updated after the termination of a subsequent disturbance.

For each load signal, the current segment's first moment $I_1$ is compared with the previous first moment maximum LMXI and minimum LMNI for the segment. The maximum or minimum for the segment is updated if a new extreme is found. The difference between the segment extremes LMXI LMNI is compared with a limit. One limit used by applicants was a factor times the maximum value of the first moment MXI1. If the difference between the extremes is small, settling is indicated.

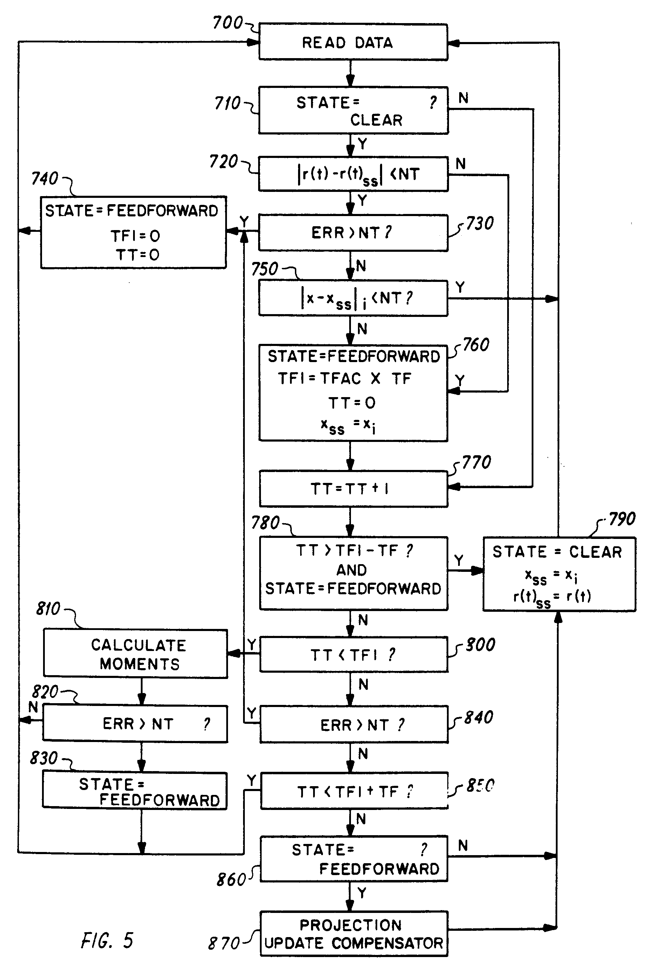

A second and preferred process is shown in flow chart form in FIG. 5. The preferred process uses a number of preferred features including treating the set point input as if it were a load input, differentiating the load signals to avoid bumping, calculating an estimated disturbance time from feedback control parameters, time scaling the projection, and combining the integration of the feedforward control and feedback controls to avoid wind up.

Current signal samples for the loads $I_i(t)$, the measurement signal y(t), the set point signal r(t), and the feedback control signal $u_b(t)$ are periodicaly taken 700. The measured loads $I_i(t)$ and set point signal r(t) are treated as a group, the measured group. Feedback control parameters are also read from the feedback controller 84. A state flag is tested to determine if a previously detected disturbance condition exists 710. Four disturbance states are possible : no disturbance, a disturbance in the measured group, a disturbance not in the measured group (called an unmeasured group disturbance) and a significant disturbance in the measured group. Once a disturbance is detected, and the program set up for monitoring and characterizing the disturbance, successive samples are processed directly. Testing each sample for a disturbance is avoided due to the state flag test 710. Where no disturbance is in progress, the absolute value of the set point signal r(t) change is compared with a noise threshold NT to detect a significant set point change 720.

If a significant set point signal r(t) change is not detected 720, the absolute control error ERR, which is the absolute value of the difference between the set point signal r(t) and the measurement signal y(t), is computed and compared with the noise threshhold NT 730. If the control error ERR exceeds the noise threshold NT, an unmeasured group disturbance is determined and feedback control corrects the error. The state flag is set to indicate an unmeasured group disturbance 740. An estimate of the disturbance time, TF1, is set to zero. A total disturbance timer TT is set to zero, since the disturbance is just starting 740. The next sample is then sought 700.

If no significant control error ERR is detected 730, then all of the load signals $I_i(t)$ are tested to detect a measured group disturbance 750. The absolute value of the difference between each current load value $I_i(t)$

and the load's previous steady state value $l_i(t)_{ss}$ is compared with a noise threshold NT. If none of the load signals $l_i(t)$ indicate a disturbance, no measured group disturbance is indicated and the next sample is sought 700.

On detecting a significant set point 720 or load disturbance 750, the state flag is set to indicate a measured group disturbance. Since the disturbance start is being detected, the total disturbance timer TT is set to zero, and the steady state signal values $r(t)_{ss}$, $l_i(t)_{ss}$ are updated with the current sample value 760.

The determination of the disturbance end relies on an estimate of the disturbance period made at the beginning of the disturbance. Instead of constructing an expandable time limit to estimate the disturbance duration as in the first embodiment, a fixed estimate of the disturbance period TF1 is set during which the disturbance is allowed to develop. The disturbance estimate TF1 is set to the product of a user specified time factor TFAC, and the closed loop characteristic time factor $t_c$ or as labeled for the program TF, calculated from the feedback controller and one of the identified process parameters, the zeroth moment term for the unmeasured disturbance $a_{m0}$. The user specified time factor, usually three, is chosen to broadly correlate response of the process 16 with the feedback loop characteristic time, TF.

By reading tuning parameters from the feedback controller 84, the closed loop characteristic time TF can be, calculated to estimate a likely duration of the feedforward upset. With a PID controller, the proportional band, the integral time, and derivative time as provided by an operator, or as developed in an adaptive feedback controller, may be combined by an appropriate formula with an identified process parameter to create a reasonable estimate of the maximum disturbance duration.

The closed loop characteristic time TF can be estimated by the equation:

$$t_c = (I(I + a_{m0}*P) + D)/t_p$$

where

$t_c$ = closed loop characteristic time in computing intervals.
I = PID integral time (reset) measured in minutes
D = PID derivative time measured in minutes
P = PID proportional band measured
$t_p$ = computing interval measured in minutes
$a_{m0}$ = identified coefficient related to the measurement signal
  y(t) initially set between zero for a dominant lag and
  one for a dominant lead.

Other formulas may be used to estimate the disturbance time. The disturbance time estimate TF1 need not be highly accurate. An estimate longer than a likely disturbance, and less than the likely time for two disturbances is preferred.

If the disturbance state flag is set by a previously detected disturbance 710, the old disturbance, or the newly detected significant set point 720 or measured group 750 disturbance is processed as follows. The total disturbance timer TT is increased once for each sample during the disturbance 770.

A test is made 780 to see if, within a reasonable time period, the disturbance has been measured as significant With applicants' determination of a likely maximum time for the disturbance duration, the disturbance should peak by the maximum time estimate TF1 minus the closed loop characteristic time TF. If the total disturbance time has approached within one characteristic loop time of the estimated disturbance maximum TF1 without a significant disturbance being found, then the compensation for the disturbance is deemed adequate. Improving the feedforward adaptation is unnecessary, so the update is aborted, and the state conditions are reset 790. The disturbance flag is cleared, the previous steady state load values $l_i(t)_{ss}$ are updated with the current values $l_i(t)$, and the previous steady state set point value $r(t)_{ss}$ is updated with the current value r(t) 790. The next sample is then sought 700.

If the total disturbance timer TT does not exceed the adjusted time factor 780, or if the disturbance has not been registered as significant, then the total disturbance timer TT is compared with the estimated disturbance TF1 800. If the total disturbance time TT is less than the estimated disturbance time TF1, then the disturbance is in the midst of passing, so the load signal $l_i(t)$ and measurement signal y(t) signals are characterized. Here the moment values for the load signal $l_i(t)$ and measurement signal y(t) signals are computed 810. A test is then made if the control error ERR exceeds the noise threshhold NT 820. If the control error ERR is less than the threshold NT, the next sample is sought 700. If the control error ERR exceeds the threshold NT 820, then the state flag is set to indicate the disturbance is significant and merits correcting by adaptation 830. The next sample is then sought 700.

If the total disturbance timer TT exceeds the estimated disturbance time TF1 800, then the total control error ERR is compared with the noise threshhold NT 840 to detect set point signal r(t) change after the

EP 0 307 466 B1

onset of the disturbance. A second and delayed disturbance requires complex processing, so applicants simplify the processing by aborting the adaptation of a disturbance spoiled by a second disturbance whose response has not settled in the estimated time. If the control error ERR exceeds the noise threshhold 840, the disturbance is then aborted, and treated as an unmeasured group disturbance 740.

If the control error ERR does not exceed the noise threshhold 840, then a settling period is tested for. The total disturbance timer TT is compared with the estimated disturbance time TF1 plus a settling period to detect the end of the disturbance. The closed loop characteristic time TF is a convenient settling period measure. If the total disturbance timer TT does not exceed the disturbance estimate TF1 plus the additional settling period limit, the next sample is sought 700.

If the, total disturbance timer TT exceeds the disturbance plus settling estimate 850, the state flag is tested for a significant disturbance in the measured group 860. If no significant measured group disturbance is indicated, the current disturbance processing is aborted, and the resetting of the state conditions is pursued 790. If a significant measured group disturbance is indicated 860, then the projection process is pursued 870.

The moment values are used in the projection process, to determine new compensator coefficients. The compensators are then updated. Coefficient calculation and compensation updating is preformed as in the first program. The state conditions are reset for processing the next disturbance 790. The current signal values $l_i(t)$, and current set point signal r(t) are stored as steady state values $l_i(t)_{ss}$, $r(t)_{ss}$ and the state flag reset to no disturbance 790. The next sample is sought 700, and disturbance seeking restarted.

One of the advantages of the present apparatus and method is the ability to apply several of the controllers to different input aspects of a single process. Load, measurement and actuator signals in one loop may act as load inputs in another loop, and vice versa so the loop inputs are crossed-linked. In such a structure with the present apparatus and method, the feedbacks and feedforwards of each loop may be adapted independently of the other loops, unlike existing designs which may require a single inflexible and monolithic treatment of the whole loop system.

While there have been shown and described what at present are considered to be the preferred embodiments of the invention, it will be apparent to those skilled in the art that various changes and modifications can be made herein without departing from the scope of the invention defined by the appended claims, for example:

The unmeasured load may be calculated from signal measures, or derived from the history of the feedback controllers response. The equipment organization and timing may be altered. In particular, the disturbance detection, and characterization is separable, as is the compensation and update portions. Other end conditions may be alternatively established, especially where assumptions about the load disturbance curve are made. For example, presuming the curve has a single peak, the end may be set as after twice the time to the peak.

Although the differentiator 48, adaptation processor 62, compensator 54, integrator 58, summer 34 and feedback processor 26, 84 are shown separately, the units may be variously grouped, or combined as a single unit. A particular advantage of the present invention is that the feedback function group is separable from the feedforward function group with minimal cross coordination between the two function groups. As shown any standard feedback controller 26 may be combined with the feedforward units without having to adjust or reprogram the adaptation processor 62, compensator 54, or process control 18 units.

The implementations shown in FIG.s 1, 2 and 3 are illustrations and variations from them are possible. In particular, the set point signal r(t) may be directed to the adaptation compensator 62. The feedback control signal $u_b(t)$ may be taken from the feedback controller 84, or an external feedback control signal $x_b$ 36. The load signals may derive from other control devices and not just load sensors and the feedback controller 26 may be eliminated.

**Claims**

1. A process controller for multivariable adaptive feedforward control of a process (16), said controller comprising
   - processing means (48, 62) which receives at least one load signal ($l_i(t)$ indicating a load input level to the process (16), a process measurement signal (y(t)) indicating the level of a controlled state, a set point (r(t)) indicating a desired condition for the controlled state, and an actuator measurement signal ($X_a$) indicating the level of an actuator (18) affecting the controlled state of said process (16), and
   - feedback controlling means (26, 34; 84) for receiving said process measurement signal (y(t)) and said set point signal (r(t)) and for producing a feedback control signal (v(t)) acting on the actuator

24

(18) to affect the process (16),

characterized in that

said processing means (48, 62) in communication with the load signal ($l_i(t)$), the process measurement signal ($y(t)$), the actuator measurement signal ($X_a$), and the set point signal ($r(t)$) performs the operations of

I) detecting a disturbance start by detecting the start of a transient as a change in a measured process variably from an initially settled or steady state condition in at least one of the load, process measurement, and set point signals ($l_i(t)$, $y(t)$, $r(t)$,

II) characterizing the load signal ($l_i(t)$) during a portion of the transient,

III) characterizing the process measurement signal ($y(t)$) during a portion of the transient,

IV) characterizing the actuator measurement signal ($X_a$) during a portion of the transient,

V) determining the signal characterizations as having ended,

VI) determining coefficients of a model relating the load, process measurement, and actuator signal characterizations,

VII) generating load signal compensation coefficients from the model coefficients for use in load compensators to generate a control signal for use by the actuator (18) in affecting the process (16).

2. The process controller of claim 1, characterized by compensation means (54) coupled to receive the compensation coefficients generated by the processing means (48, 62) and having the load compensators operating with the compensation coefficients on the load signals to generate the control signal ($v(t)$) for use by the actuator (18) in affecting the process (16).

3. The process controller fo claim 1 or 2, characterized in that a disturbance start is detected by determining a steady-state value for each of the load and set point signals ($l_i(t)$, $r(t)$) while no disturbance is occurring, and comparing the steady-state signal value with a current value for the corresponding signal to indicate a signal difference indicating the start of a disturbance in the signal.

4. The process controller of claim 3, characterized in that a disturbance is determined when the signal difference exceeds a threshold amount.

5. The process controller of any one of claims 1 to 4, characterized in that at least one series term of a series of weighted time integrals of different orders from the start of the disturbance to the end determination is calculated for each of the disturbed load, process measurement, and actuator measurement signal ($l_i(t)$, $y(t)$, $X_a$).

6. The process controller of any one of claims 1 to 5, characterized in that the end of the load and process characterizations is determined when all of the respective disturbed signals have returned to a steady-state condition.

7. The process controller of any one of claims 1 to 5, characterized in that the end condition is determined when a disturbance time is in excess of a preset disturbance duration time, or a test for a set point signal change is in excess of a preset value.

8. The process controller of any one of claims 1 to 7, characterized in that the determining coefficients of a model comprises relating the load and process measurement characterizations by corresponding order of time dynamics.

9. The process controller of any one of claims 1 to 8, characterized in that the model coefficients are coefficients of a series defining a transfer function relating the load to the process measurement signals ($y(t)$).

10. The process controller of any one of claims 1 to 9, characterized in that the model coefficients for each measured load correspond by degrees of time dynamic to a transfer function for the respective load signal and process.

11. The process controller of any one of claims 1 to 10, characterized in that the model includes an adjustable factor corresponding to an unmeasured load term.

**12.** The process controller of any one of claims 1 to 11, characterized in that a solution point is positioned between the intersection of a current solution to the model equations and the next previous solution.

**13.** A method for multivariable adaptive control of a process (16), having inputs and an output related to a measured variable, comprising the steps of:
a) receiving at least one load signal ($l_i(t)$) corresponding to a process input variable;
b) receiving a process measurement signal ($y(t)$) corresponding to a process state;
c) receiving an actuator measurement signal ($r(t)$) corresponding to the condition of an actuator (18) affecting the controlled process state;
d) detecting a disturbance start from an initially settled or steady state condition by detecting the start of a transient as a change in a measured process variable in at least one of the load signals ($l_i(t)$);
e) determining the transient in the disturbed load signal ($l_i(t)$) as having ended;
f) characterizing at least a portion of the load signal ($l_i(t)$) between the disturbance start and end by calculating coefficients of a series representation of the disturbed load signal where each such coefficient is a weighted time integral of the disturbed load signal;
g) characterizing at least a corresponding portion of the process measurement signal ($y(t)$) between the disturbance start and end by calculating coefficients of a series representation of the process measurement signal ($y(t)$) where each such coefficient is a weighted time integral of the process signal;
h) performing a mathematical projection from a current solution point in a current coefficient solution subspace of a linear process model equation space relating the load, process measurement and actuator measurement signal ($l_i(t)$, $y(t)$, $X_a$) to an updated solution point in an updated solution space determined by the updated coefficients, to yield an updated solution point; and
i) compensating the load signals ($l_i(t)$) with compensators operating with the updated solution point coefficients to generate a control signal ($v(t)$) affecting the actuator (18).

**14.** The method of claim 13, characterized by comprising the further steps of detecting a disturbance:
a) determining a steady-state value for each of the load and process measurement signals ($l_i(t)$, $y(t)$) while no disturbance is occurring; and
b) comparing the steady-state signal values with a current value for the corresponding signal to provide a difference indicating the start of a disturbance in the respective signal.

**15.** The method of claim 13 or 14, characterized in that said determining the end of the load and process characterizations further includes determining that all of the respective disturbed signals have returned to a steady state condition.

**16.** The method of claim 13 or 14, characterized in that said determining the end of the load and process characterizations further includes determining an estimate of the disturbance duration and after a portion of the estimate has elapsed, determining that all of the respective disturbed signals have returned to a steady-state condition.

**17.** The method of claim 13 or 14, characterized in that said determining that all of the respective signals have returned to a steady-state condition includes the further steps of:
a) determining a steady-state value for each of the load and process measurement signals ($l_i(t)$, $y(t)$) while no disturbance is occurring; and
b) comparing the steady-state signal values with a current value for the corresponding signal to indicate a difference indicating the start of a disturbance in the respective signal.

**18.** The method of claim 13 or 14, characterized by determining that the respective disturbed signals are all within a steady-state condition for a time period.

**19.** The method of any one of claims 13 to 18, characterized in that the time period is at least a significant portion of the time from the start of the disturbance to the start of the steady-state condition.

**20.** The method of any one of claims 13 to 19, characterized by including the steps of:
a) determining an end condition of the disturbed signals by performing the steps of: determining as a first condition that the disturbance time exceeds the closed loop response time; and determining when the first condition is true that the process measurement signal (y(t)) remains settled within a normal signal variance of the set point for an additional time period equal to closed loop characteristic time;

b) characterizing at least corresponding portions of the load signal ($l_i(t)$, the process measurement signal (y(t)), and the actuator feedback signal ($X_a$) between the disturbance start and end by calculating coefficients of a moment series of each disturbed signal where each such coefficient is a weighted time integral of the disturbed signal, where the $n^{th}$ moments are calculated respectively for each sample by the expressions

$$M_n(y') = \sum_{j=0}^{j=e}[(-j/t_c)^n/n!][\ y(j) - y(j-1)]$$

$$M_n(v') = \sum_{j=0}^{j=e}[(-j/t_c)^n/n!][\ v(j) - v(j-1)]$$

$$M_n(l_i') = \sum_{j=0}^{j=e}[(-j/t_c)^n/n!][l_i(j) - l_i(j-1)]$$

respectively, where

$y' =$ the derivative of the process measurement signal (y(t)),
$v' =$ the derivative of the final control signal (v(t)),
$l_i' =$ the derivatives of the load signal ($l_i(t)$),
$n =$ a positive integer or zero for the degree of the moment,
$j =$ a count of the sample time from the disturbance start $j=0$, to the disturbance end, $j=e$, and
$t_c =$ a characteristic disturbance recovery time measured in sampling intervals computed as

$$t_c = (I(I + a_{m0}*P) + D)/t_p$$

where

$I =$ PID integral time,
$D =$ PID derivative time,
$P =$ PID proportional band,
$t_p =$ computing interval, and
$a_{m0} =$ identified coefficient related to the measurement signal y(t),

c) performing a mathematical Projection from a current solution point in a current coefficient solution subspace of a process model equation, having the form

$$Y = (V - L_u A^*_u - \Sigma_i L_i A_i^*)(A^*_m)^{-1}$$

where

$Y$ is a transform of the measurement signal y(t),
$V$ is a transform of the final control v(t),
$L_i$ is a transform of the loads $l_i(t)$,
$L_u$ is a transform of the unmeasured load $l_u$,
$A^*_m$ is an ideal transfer function of the measurement signal,
$A^*_i$ is an ideal transfer function of the measured load, and
$A^*_u$ is an ideal transfer function of the unmeasured loads, wherein projecting includes the steps of

I) computing $S_0$, $S_1$, $S_{01}$, and Del by the equations

$S_0 = \Sigma_i((l_{i0})^2) + (y_0)^2 + (l_{u0})^2$
$S_1 = \Sigma_i((l_{i1})^2) + (y_1)^2$
$S_{01} = \Sigma_i((l_{i0})(l_{i1})) + (y_0)(y_1)$

$$\text{Del} = S_0^2 + (S_0 S_1 + (S_{01})^2)$$

where

$$l_{i0} = M_0(l_i')$$
$$l_{i1} = M_1(l_i')$$
$$Y_0 = M_0(Y')$$
$$Y_1 = M_1(Y'), \text{ and}$$
$$l_{uo} = M_0(l_u),$$

II) computing adjusted control signal moments $U_0$, $U_1$ by the equations

$$U_0 = v_0 - \Sigma_i(l_{i0} a_{i0}) - y_0 a_{m0}$$
$$U_1 = v_1 - \Sigma_i(l_{i0} a_{i1} + y_0 a_{m0}) - y_0 a_{m1} - y_1 a_{m0}$$

where

$v_0 =$     a zeroth moment characterizing the actuator measurement signal,

$v_1 =$     a first moment characterizing the actuator measurement signal,

$a_{i0} =$     a zeroth moment characterizing the $i^{th}$ load,

$a_{i1} =$     a first moment characterizing the $i^{th}$ load,

$a_{m0} =$     a zeroth moment characterizing the unmeasured load,

$a_{m1} =$     a first moment characterizing the unmeasured load,

$y_{m0} =$     a zeroth moment characterizing the measurement signal, and

$y_{m1} =$     a first moment characterizing the measurement signal

III) computing adaption coefficients $b_0$, $b_1$ by the equations

$$b_0 = [(S_0 + S_1)U_0 - S_{01} U_1]/\text{Del}, \text{ and}$$
$$b_1 = (S_0 U_1 - S_{01} U_0)/\text{Del},$$

IV) computing for each load compensator the compensator coefficients $a_{i0}$, $a_{i1}$ by the interactive equations

$$a_{i0} = a_{i0} + b_0 l_{i0} + b_1 l_{i1}$$
$$a_{i1} = a_{i1} + b_1 l_{i0}$$

V) computing, for the unmeasured load model term, the inverse process $a_{m0}$, $a_{m1}$ by the interactive equations

$$a_{m0} = a_{m0} + b_0 y_0 + b_1 y_1, \text{ and}$$
$$a_{m1} = a_{m1} + b_1 y_0,$$

VI) computing, from each pair of compensator moments compensator transfer function, a lead-lag compensator,

d) compensating the load signals ($l_i(t)$) with compensators operating with the updated solution point coefficients to generate a differentiated control signal,

e) summing the differentiated feedforward control signal with an actuator measurement signal, and

f) performing a feedback loop integration of the combined feedforward and actuator measurement signal sum and the feedback control signal to produce an actuator control signal.

## Patentansprüche

1. Prozeßregler für multivariable adaptive Vorkopplungsregelung eines Prozesses (16), wobei der Regler umfaßt:

- eine Verarbeitungseinheit (48, 62) zum Abnehmen mindestens eines eine Lasteingangsgröße zum Prozeß (16) angebenden Lastsignals ($l_i(t)$), eines die Größe eines geregelten Status angebenden

28

Prozeßmeßsignals (y(t)), eines einen gewünschten oder Soll-Zustand für den geregelten Status angebenden Sollwerts (r(t)) und eines Stellgliedmeßsignals ($X_a$), das die den geregelten Zustand des Prozesses (16) beeinflussende Größe eines Stellglieds (18) angibt, und

- eine Rückkopplungsregeleinheit (26, 34; 84) zum Abnehmen des Prozeßmeßsignals (y(t)) und des Sollwertsignals (r(t)) und zum Erzeugen eines auf das Stellglied (18) zum Beeinflussen des Prozesses wirkenden Rückkopplungsregelsignals (v(t)),

dadurch gekennzeichnet, daß

die Verarbeitungseinheit (48, 62) in Verbindung mit dem Lastsignal ($l_i$(t)), dem Prozeßmeßsignal (y(t)), dem Stellgliedmeßsignal ($X_a$) und dem Sollwertsignal (r(t)) folgende Operationen durchführt:

I) Detektieren eines Störgrößenbeginns durch Detektieren oder Erfassen eines Übergangs als eine Änderung in einer Meßgrößenvariablen von einem anfänglichen eingeschwungenen oder Dauerstatuszustand in mindestens einem der Last-, Prozeßmeß- und Sollwertsignale ($l_i$(t), y(t), r(t)),

II) Kennzeichnen des Lastsignals (li(t)) während eines Teils des Übergangs bzw. Einschwingens,

III) Kennzeichnen des Prozeßmeßsignals (y(t)) während eines Teils des Übergangs,

IV) Kennzeichnen des Stellgliedmeßsignals ($X_a$) während eines Teils des Übergangs,

V) Bestimmen der Signalkennzeichnungen als beendet,

VI) Bestimmen von Koeffizienten eines auf die Last-, Prozeßmeß- und Stellgliedsignalkennzeichnungen bezogenen Modells, (und)

VII) Erzeugen von Lastsignalkompensierkoeffizienten anhand der Modellkoeffizienten zur Verwendung in Lastkompensatoren zwecks Erzeugung eines Steuersignals für Verwendung durch das Stellglied (18) beim Beeinflussen des Prozesses (16).

2. Prozeßregler nach Anspruch 1, gekennzeichnet durch eine zum Abnehmen der durch die Verarbeitungseinheit (48, 62) erzeugten Kompensierkoeffizienten geschaltete Kompensiereinheit (54) mit den Lastkompensatoren, die mit den Kompensierkoeffizienten auf die Lastsignale einwirken zwecks Erzeugung des Steuersignals (v(t)) zur Verwendung durch das Stellglied (18) bei der (für die) Beeinflussung des Prozesses (16).

3. Prozeßregler nach Anspruch 1 oder 2, dadurch gekennzeichnet, daß ein Störgrößenbeginn durch Bestimmung eines Dauerstatuswerts für jedes der Last- und Sollwertsignale ($l_i$(t), r(t)), während keine Störgröße auftritt, und Vergleichen des Dauerstatussignalwerts mit einem Augenblickswert für das betreffende Signal zwecks Angabe einer Signaldifferenz, welche den Beginn einer Störgröße im Signal anzeigt, detektiert wird.

4. Prozeßregler nach Anspruch 3, dadurch gekennzeichnet, daß eine Störgröße bestimmt wird, wenn die Signaldifferenz eine Schwellen(wert)größe übersteigt.

5. Prozeßregler nach einem der Ansprüche 1 bis 4, dadurch gekennzeichnet, daß mindestens ein Reihenausdruck oder -term einer Reihe gewichteter Zeitintegrale verschiedener Größenordnungen von Beginn der Störgröße zum Ende der Bestimmung für jedes der gestörten Last-, Prozeßmeß- und Stellgliedmeßsignale ($l_i$(t), y(t), $X_a$) berechnet wird.

6. Prozeßregler nach einem der Ansprüche 1 bis 5, dadurch gekennzeichnet, daß das Ende der Last- und Prozeßkennzeichnungen bestimmt wird, wenn alle jeweiligen gestörten Signale auf einen Dauer- oder Einschwingzustand zurückgekehrt sind.

7. Prozeßregler nach einem der Ansprüche 1 bis 5, dadurch gekennzeichnet, daß der Endezustand bestimmt wird, wenn eine Störgrößenzeit eine vorgegebene Störgrößendauer übersteigt oder ein Test für eine Sollwertsignaländerung eine vorgegebene Größe übersteigt.

8. Prozeßregler nach einem der Ansprüche 1 bis 7, dadurch gekennzeichnet, daß die Bestimmungskoeffizienten eines Modells das Beziehen der Last- und Prozeßmeßkennzeichnungen nach entsprechender Ordnung der Zeitdynamik umfassen.

9. Prozeßregler nach einem der Ansprüche 1 bis 8, dadurch gekennzeichnet, daß die Modellkoeffizienten Koeffizienten einer Reihe oder Serie sind, die eine auf die Last- und Prozeßmeßsignale (y(t)) bezogene Übertragungsfunktion definiert.

**10.** Prozeßregler nach einem der Ansprüche 1 bis 9, dadurch gekennzeichnet, daß die Modellkoeffizienten für jede gemessene Last nach dem Grad der Zeitdynamik einer Übertragungsfunktion für das jeweilige Lastsignal und den Prozeß (Last- und Prozeßsignal) entsprechen.

**11.** Prozeßregler nach einem der Ansprüche 1 bis 10, dadurch gekennzeichnet, daß das Modell einen einstellbaren Faktor entsprechend einem nichtgemessenen Lastausdruck oder -term enthält.

**12.** Prozeßregler nach einem der Ansprüche 1 bis 11, dadurch gekennzeichnet, daß ein Auflösungspunkt zwischen dem Schnittpunkt einer augenblicklichen Auflösung der Modellgleichungen und der nächsten (unmittelbar) vorhergehenden Auflösung positioniert ist.

**13.** Verfahren für die multivariable adaptive Regelung eines Prozesses (16), mit auf eine gemessene Variable (oder Veränderliche) bezogenen Eingängen und einem Ausgang, umfassend die folgenden Schritte:

a) Abnehmen mindestens eines Lastsignals ($l_i(t)$) entsprechend einer Prozeßeingangsvariablen,

b) Abnehmen eines Prozeßmeßsignals ($y(t)$) entsprechend einem Prozeßstatus,

c) Abnehmen eines Stellgliedmeßsignals ($r(t)$) entsprechend dem Zustand eines den geregelten Prozeßstatus beeinflussenden Stellglieds (18),

d) Detektieren bzw. Erfassen eines Störgrößenbeginns anhand eines anfänglich eingeschwungenen oder Dauerstatuszustands durch Detektieren des Beginns eines Übergangs als eine Änderung in einer gemessenen Prozeßvariablen in mindestens einem der Lastsignale ($l_i(t)$),

e) Bestimmen, daß der Übergang im gestörten Lastsignal ($l_i(t)$) geendet hat (beendet ist),

f) Kennzeichnen mindestens eines Teils des Lastsignals ($l_i(t)$) zwischen dem Störgrößenbeginn und dem -ende durch Berechnen von Koeffizienten einer Reihendarstellung des gestörten Lastsignals, wobei jeder derartige Koeffizient ein gewichtetes Zeitintegral des gestörten Lastsignals ist,

g) Kennzeichnen mindestens eines entsprechenden Teils des Prozeßmeßsignals ($y(t)$) zwischen Störgrößenbeginn und -ende durch Berechnen von Koeffizienten einer Reihendarstellung des Prozeßmeßsignals ($y(t)$), wobei jeder derartige Koeffizient ein gewichtetes Zeitintegral des Prozeßsignals ist,

h) Durchführen einer mathematischen Projektion von einem augenblicklichen Auflösungspunkt in einem augenblicklichen Koeffizientauflösungsunterraum eines linearen Prozeßmodellgleichungsraums bezüglich des Last-, Prozeßmeß- und Stellgliedmeßsignals ($l_i(t)$), $y(t)$, $X_a$) auf einen oder zu einem aktualisierten Auflösungspunkt in einem durch die aktualisierten Koeffizienten bestimmten aktualisierten Auflösungsraum zwecks Lieferung eines aktualisierten Auflösungspunkts und

i) Kompensieren der Lastsignale ($l_i(t)$ mit Kompensatoren, die mit den aktualisierten Auflösungspunktkoeffizienten arbeiten, um ein das Stellglied (18) beeinflussendes Steuersignal ($v(t)$) zu erzeugen.

**14.** Verfahren nach Anspruch 13, gekennzeichnet durch die weiteren Schritte des Detektierens einer Störgröße:

a) Bestimmen einer Dauerstatusgröße für jedes der Last- und Prozeßmeßsignale ($l_i(t)$, $y(t)$), während keine Störgröße auftritt, und

b) Vergleichen der Dauerstatussignalgrößen mit einer augenblicklichen Größe für das betreffende Signal zwecks Lieferung einer den Beginn einer Störgröße im betreffenden Signal anzeigenden Differenz.

**15.** Verfahren nach Anspruch 13 oder 14, dadurch gekennzeichnet, daß die Bestimmung des Endes der Last- und Prozeßkennzeichnungen ferner die Bestimmung, daß alle der betreffenden gestörten Signale in einen Dauerstatuszustand zurückgekehrt sind, beinhaltet.

**16.** Verfahren nach Anspruch 13 oder 14, dadurch gekennzeichnet, daß die Bestimmung des Endes der Last- und Prozeßkennzeichnungen ferner die Bestimmung eines Schätzwerts der Störgrößendauer und, nachdem ein Teil des Schätzwerts verstrichen ist, die Bestimmung, daß alle der betreffenden gestörten Signale in einen Dauerstatuszustand zurückgekehrt sind, beinhaltet.

**17.** Verfahren nach Anspruch 13 oder 14, dadurch gekennzeichnet, daß die Bestimmung, daß alle der betreffenden gestörten Signale in einen Dauerstatuszustand zurückgekehrt sind, die folgenden weiteren Schritte umfaßt:

a) Bestimmen einer Dauerstatusgröße für jedes der Last- und Prozeßmeßsignale ($l_i(t)$, $y(t)$), während keine Störgröße auftritt, und

b) Vergleichen der Dauerstatussignalgrößen mit einer augenblicklichen Größe für das betreffende Signal zwecks Angabe einer Differenz, die den Beginn einer Störgröße im betreffenden Signal anzeigt.

**18.** Verfahren nach Anspruch 13 oder 14, gekennzeichnet durch Bestimmen, daß die betreffenden gestörten Signale sämtlich für eine bzw. während einer Zeitspanne in einem Dauerstatuszustand vorliegen.

**19.** Verfahren nach einem der Ansprüche 13 bis 18, dadurch gekennzeichnet, daß die Zeitspanne mindestens ein wesentlicher Teil der Zeit vom Beginn der Störgröße zum Beginn des Dauerstatuszustands ist.

**20.** Verfahren nach einem der Ansprüche 13 bis 19, gekennzeichnet durch folgende Schritte:

a) Bestimmen eines Endzustands der gestörten Signale durch Ausführen der Schritte: Bestimmen als erste Bedingung, daß die Störgrößenzeit die Regelschleifenansprechzeit übersteigt, und dann, wenn die erste Bedingung zutrifft, Bestimmen, daß das Prozeßmeßsignal ($y(t)$) innerhalb einer normalen Signalvarianz des Sollwerts während einer zusätzlichen Zeitspanne gleich der Regelschleifencharakteristikzeit eingeschwungen bleibt,

b) Kennzeichnen zumindest entsprechender Teile des Lastsignals ($l_i(t)$), des Prozeßmeßsignals ($y(t)$) und des Stellgliedrückkopplungssignals ($X_a$) zwischen Störgliedbeginn und -ende durch Berechnen von Koeffizienten einer Momentreihe jedes gestörten Signals, wobei jeder derartige Koeffizient ein gewichtetes Zeitintegral des gestörten Signals ist, und wobei die n-ten Momente jeweils für jede Probe (sample) nach den folgenden Ausdrücken oder Gleichungen berechnet werden:

$$M_n(y') = \sum_{j=0}^{j=e} [(-j/t_c)^n/n!][\, y(j) - y(j-1)\,]$$

$$M_n(v') = \sum_{j=0}^{j=e} [(-j/t_c)^n/n!][\, v(j) - v(j-1)\,]$$

$$M_n(l_i') = \sum_{j=0}^{j=e} [(-j/t_c)^n/n!][\, l_i(j) - l_i(j-1)\,]$$

in denen bedeuten:

$y'$ = die Ableitung des Prozeßmeßsignals ($y(t)$),

$v'$ = die Ableitung des endgültigen Regelsignals ($v(t)$),

$l_i'$ = die Ableitung des Lastsignals ($l_i(t)$),

$n$ = eine positive ganze Zahl oder Null für den Grad des Moments,

$j$ = eine Zählung der Probenzeit vom Störgrößenbeginn $j=0$ bis zum Störgrößenende $j=e$ und

$t_c$ = charakteristische Störgrößenerholungszeit, gemessen in Abtastintervallen, berechnet zu

$$t_c = (I(I + a_{m0}{}^*P) + D)/t_p$$

worin bedeuten:

$I$ = PID-Integralzeit,

$D$ = PID-Ableitungszeit,

$P$ = PID-Proportionalband,

$t_p$ = Berechnungsintervall und

$a_{mo}$ = identifizierter Koeffizient, bezogen auf das Meßsignal $y(t)$,

c) Durchführen einer mathematischen Projektion von einem augenblicklichen Auflösungspunkt in einem augenblicklichen Koeffizientenauflösungsunterraum einer Prozeßmodellgleichung in der Form:

$$Y = (V - L_u A^*_u - \Sigma_i L_i A_i{}^*)(A^*m)^{-1}$$

worin bedeuten:

$Y =$ eine Transformierte des Meßsignals $y(t)$,

$V =$ eine Transformierte der endgültigen Regelung $v(t)$,

$L_i =$ eine Transformierte der Lasten $l_i(t)$,

$L_u =$ eine Transformierte der nichtgemessenen Last $l_u$,

$A^*_m =$ eine ideale Übertragungsfunktion des Meßsignals,

$A^*_i =$ eine ideale Übertragungsfunktion der gemessenen Last und

$A^*_u =$ eine ideale Übertragungsfunktion der nichtgemessenen Lasten, wobei das Projizieren die Schritte umfaßt:

I) Berechnen von $S_0$, $S_1$ und $S_{01}$ und Del nach den (folgenden) Gleichungen:

$S_0 = \Sigma_i((l_{i0})^2) + (y_0)^2 + (l_{u0})^2$

$S_1 = \Sigma i((l_{i1})^2) + (y_1)^2$

$S_{01} = \Sigma_i((l_{i0})(l_{i1})) + (y_0)(y_1)$

$$Del = S_0^2 + (S_0 S_1 + (S_{01})^2)$$

worin bedeuten:

$l_{i0} = M_0(l_i')$

$l_{i1} = M_1(l_i')$

$Y_0 = M_0(Y')$

$Y_1 = M_1(Y')$ und

$l_{u0} = M_0(l_u)$,

II) Berechnen eingestellter Regelsignalmomente $U_0$, $U_1$ nach den (folgenden) Gleichungen:

$U_0 = v_0 - \Sigma_i(l_{i0}a_{i0}) - y_0 a_{m0}$

$U_1 = v_1 - \Sigma i(l_{i0}a_{i1} + y_0 a_{m0}) - y_0 a_{m1} - y_1 a_{m0}$

worin bedeuten:

$V_0 =$ ein O-tes Moment, welches das Stellgliedmeßsignal kennzeichnet,

$V_1 =$ ein erstes Moment, welches das Stellgliedmeßsignal kennzeichnet,

$a_{i0} =$ ein die i-te Last kennzeichnendes O-tes Moment,

$a_{i1} =$ ein die i-te Last kennzeichnendes erstes Moment,

$a_{m0} =$ ein die nichtgemessene Last kennzeichnendes O-tes Moment,

$a_{m1} =$ ein die nichtgemessene Last kennzeichnendes erstes Moment,

$y_{m0} =$ ein das Meßsignal kennzeichnendes O-tes Moment und

$y_{m1} =$ ein das Meßsignal kennzeichnendes erstes Moment,

III) Berechnen von Adaptionskoeffizienten $b_0$, $b_1$ nach den (folgenden) Gleichungen:

$b_0 = [(S_0 + S_1)U_0 - S_{01}U_1]/Del$ und

$b_1 = (S_0 U_1 - S_{01}U_0)/Del$,

IV) für jeden Lastkompensator erfolgendes Berechnen der Kompensatorkoeffizienten $a_{i0}$, $a_{i1}$ nach den (folgenden) gegenseitig wirksamen oder interaktiven Gleichungen:

$a_{i0} = a_{i0} + b_0 1_{i0} + b_1 l_{i1}$

$a_{i1} = a_{i1} + b_1 l_{i0}$

V) für den nichtgemessenen Lastmodellausdruck erfolgendes Berechnen des inversen Prozesses $a_{m0}$, $a_{m1}$ nach den (folgenden) wechselseitig wirksamen oder interaktiven Gleichungen:

$a_{m0} = a_{m0} + b_0 y_0 + b_1 y_1$ und

$a_{m1} = a_{m1} + b_1 y_0$,

EP 0 307 466 B1

VI) Berechnen eines Vor/Nacheil -Kompensators aus jedem Paar von Kompensatormomenten entsprechend Kompensatorparametern für die Kompensatorübertragungsfunktion,

d) Kompensieren der Lastsignale ($l_i(t)$) mit Kompensatoren, mit den aktualisierten Auflösungspunktkoeffizienten arbeitend, zwecks Erzeugung eines differenzierten Regelsignals,

e) Summieren des differenzierten Vorkopplungsregelsignals mit einem Stellgliedmeßsignal und

f) Durchführen einer Rückkopplungsschleifenintegration der kombinierten Vorkopplungs- und Stellgliedmeßsignalsumme und des Rückkopplungsregelsignals zwecks Erzeugung eines Stellgliedregelsignals.

## Revendications

1. Un dispositif de commande de processus pour une commande adaptative à action directe d'un processus (16), ledit dispositif de commande comportant
   - des moyens de traitement (48,62) qui reçoivent au moins un signal de charge ($l_i(t)$)indiquant un niveau d'entrée de charge au processus (16), un signal de mesure de processus (y(t)) indiquant le niveau d'un état commandé, un signal de point établi (r(t)) indiquant une condition désirée pour l'état commandé, et un signal ($X_a$) de mesure d'un élément d'actionnement indiquant le niveau d'un élément d'actionnement (18) affectant l'état commandé dudit processus (16), et
   - des moyens de commande de contre-réaction (26,34 ; 84) pour recevoir ledit signal de mesure de processus (y(t)) et ledit signal de point établi (r(t)) et pour produire un signal de commande de contre-réaction (v(t)) agissant sur l'élément d'actionnement (18)pour affecter le processus (16),
   caractérisé en ce que
   lesdits moyens de traitement (48,62) en communication avec le signal de charge ($l_i(t)$), le signal de mesure de processus (y(t)), le signal ($X_a$) de mesure de l'élément d'actionnement et le signal de point établi (r(t)) exécutent les opérations consistant à
   I) détecter un début de perturbation en détectant le début d'un phénomène transitoire en tant que variation dans un processus mesuré de manière variable à partir d'une condition d'état initialement établi ou fixe dans au moins l'un des signaux ($l_i(t)$, y(t), r(t)) de charge, de mesure de processus et de point établi,
   II) caractériser le signal de charge ($l_i(t)$) pendant une partie du phénomène transitoire,
   III) caractériser le signal de mesure de processus (y(t)) pendant une partie du phénomène transitoire,
   IV) caractériser le signal ($X_a$) de mesure de l'élément d'actionnement pendant une partie du phénomène transitoire,
   V) déterminer que les caractérisations de signal sont terminées,
   VI) déterminer des coefficients d'un modèle relatifs aux caractérisations des signaux de charge, de mesure de processus et de l'élément d'actionnement,
   VII) engendrer des coefficients de compensation de signal de charge à partir des coefficients du modèle pour leur utilisation dans des compensateurs de charge de manière à engendrer un signal de commande à utiliser par l'élément d'actionnement (18) pour affecter le processus (16).

2. Le dispositif de commande de processus de la revendication 1, caractérisé par des moyens de compensation (54) couplés pour recevoir les coefficients de compensation engendrés par les moyens de traitement (48, 62) et comportant les compensateurs de charge agissant avec les coefficients de compensation sur les signaux de charge pour engendrer le signal de commande (v(t)) à utiliser par l'élément d'actionnement (18) pour affecter le processus (16).

3. Le dispositif de commande de processus de la revendication 1 ou 2, caractérisé en ce qu'un début de perturbation est détecté en déterminant une valeur d'état stable pour chacun des signaux ($l_i(t)$, r(t)) de charge et de point établi lorsqu'aucune perturbation ne se produit, et en comparant la valeur du signal d'état fixe avec une valeur de courant pour le signal correspondant pour indiquer une différence de signal révélant le début d'une perturbation dans le signal.

4. Le dispositif de commande de processus de la revendication 3, caractérisé en ce qu'une perturbation est déterminée lorsque la différence de signal dépasse une quantité seuil.

33

5. Le dispositif de commande de processus de l'une quelconque des revendications 1 à 4, caractérisé en ce qu'au moins un terme de série d'une série d'intégrales en fonction du temps de différents ordres à partir du début de la perturbation jusqu'à la détermination de la fin est calculé pour chacun des signaux ($l_i(t)$, $y(t)$, $X_a$) de charge, de mesure de processus et de mesure de l'élément d'actionnement.

6. Le dispositif de commande de l'une quelconque des revendications 1 à 5, caractérisé en ce que la fin des caractérisations de charge et de processus est déterminée lorsque tous les signaux perturbés respectifs sont revenus à une condition d'état stable.

7. Le dispositif de commande de processus de l'une quelconque des revendications 1 à 5, caractérisé en ce que la condition de fin est déterminée lorsqu'une durée de perturbation dépasse une durée de perturbation préétablie, ou lorsqu'un essai pour une variation du signal de point établi dépasse une valeur préétablie.

8. Le dispositif de commande de processus de l'une quelconque des revendications 1 à 7, caractérisé en ce que la détermination des coefficients d'un modèle comporte la mise en relation des caractérisations des mesures de charge et de processus par un ordre correspondant de dynamiques de temps.

9. Le dispositif de commande de processus de l'une quelconque des revendications 1 à 8, caractérisé en ce que les coefficients du modèle sont des coefficients d'une série définissant une fonction transfert reliant les signaux de charge et de mesure de processus ($y(t)$).

10. Le dispositif de commande de processus de l'une quelconque des revendications 1 à 9, caractérisé en ce que les coefficients du modèle pour chaque charge mesurée correspondent par degrés de dynamique de temps à une fonction transfert pour le signal de charge et le processus respectifs.

11. Le dispositif de commande de processus de l'une quelconque des revendications 1 à 10, caractérisé en ce que le modèle comporte un facteur réglable correspondant à un terme de charge non mesurée.

12. Le dispositif de commande de processus de l'une quelconque des revendications 1 à 11, caractérisé en ce qu'un point de solution est positionné entre l'intersection d'une solution courante aux équations modèles et la solution immédiatement précédente.

13. Un procédé pour une commande adaptative à variables multiples d'un processus (16), comportant des entrées et une sortie en relation avec une variable mesurée, comportant les étapes consistant à :
   a) recevoir au moins un signal de charge ($l_i(t)$) correspondant à une variable d'entrée de processus ;
   b) recevoir un signal de mesure de processus ($y(t)$) correspondant à un état de processus ;
   c) recevoir un signal de mesure d'élément d'actionnement ($r(t)$) correspondant à la condition d'un élément d'actionnement (18) affectant l'état du processus contrôlé ;
   d) détecter un début de perturbation à partir d'un état initialement établi ou stable en détectant le début d'un phénomène transitoire en tant que variation d'une variable de processus mesurée dans au moins l'un des signaux de charge ($l_i(t)$) ;
   e) déterminer que le phénomène transitoire dans le signal de charge perturbé ($l_i(t)$) est terminé ;
   f) caractériser au moins une partie du signal de charge ($l_i(t)$) entre le début et la fin de la perturbation en calculant des coefficients d'une représentation série du signal de charge perturbé , dans laquelle chaque coefficient est une intégrale en fonction du temps du signal de charge perturbé ;
   g) caractériser au moins une partie correspondante du signal de mesure de processus ($y(t)$) entre le début et la fin de la perturbation en calculant des coefficients d'une représentation série du signal de mesure de processus ($y(t)$), dans laquelle chaque coefficient est une intégrale en fonction du temps du signal de processus ;
   h) exécuter une projection mathématique à partir d'un point de solution courante dans un sous-espace de solution de coefficient courante d'un espace d'équations modèles linéaires du processus en relation avec les signaux ($l_i(t)$, $y(t)$, $X_a$) de charge, de mesure de processus et de mesure de l'élément d'actionnement jusqu'à un point de solution actualisée dans un espace de solution actualisée déterminé par les coefficients actualisés, pour donner un point de solution actualisée; et
   i) compenser les signaux de charge ($l_i(t)$) avec des compensateurs agissant avec les coefficients de point de solution actualisée pour engendrer un signal de commande ($v(t)$) affectant l'élément d'actionnement (18).

14. Le procédé de la revendication 13, caractérisé en ce qu'il comporte les étapes additionnelles consistant à détecter une perturbation :

a) déterminer une valeur d'état stable pour chacun des signaux ($l_i(t)$, $y(t)$) de charge et de mesure de processus lorsqu'aucune perturbation ne se produit; et

b) comparer les valeurs de signaux d'état stable avec une valeur courante pour le signal correspondant de manière à fournir une différence indiquant le début d'une perturbation dans le signal respectif.

15. Le procédé de la revendication 13 ou 14, caractérisé en ce que ladite détermination de la fin des caractérisations de charge et de processus comporte au surplus la détermination que tous les signaux perturbés respectifs sont revenus à une condition d'état stable.

16. Le procédé de la revendication 13 ou 14, caractérrisé en ce que ladite détermination de la fin des caractérisations de charge et de processus comporte au surplus la détermination d'une estimation de la durée de la perturbation et, après qu'une partie de l'estimation s'est écoulée, la détermination que tous les signaux perturbés respectifs sont revenus à une condition d'état stable.

17. Le procédé de la revendication 13 ou 14, caractérisé en ce que ladite détermination que tous les signaux respectifs sont revenus à une condition d'état stable comporte les étapes additionnelles consistant à :

a) déterminer une valeur d'état stable pour chacun des signaux ($l_i(t)$, $y(t)$) de charge et de mesure de processus lorsqu'aucune perturbation ne se produit ; et

b) comparer les valeurs de signaux d'état stable avec une valeur courante pour le signal correspondant de manière à indiquer une différence indiquant le début d'une perturbation dans le signal respectif.

18. Le procédé de la revendication 13 ou 14, caractérisé par la détermination que les signaux perturbés respectifs sont tous dans une condition d'état stable pendant une durée.

19. Le procédé de l'une quelconque des revendications 13 à 18, caractérisé en ce que la durée est au moins une partie significative de la durée à partir du début de la perturbation jusqu'au début de la condition d'état stable.

20. Le procédé de l'une quelconque des revendications 13 à 19, caractérisé en ce qu'il comporte les étapes consistant à :

a) déterminer une condition de fin des signaux perturbés en exécutant les étapes consistant à : déterminer comme première condition que la durée de la perturbation dépasse le temps de réponse en boucle fermée ; et déterminer, lorsque la première condition est vraie, que le signal ($y(t)$) de mesure de processus reste établi à l'intérieur d'une variation normale de signal du point établi pendant une période additionnelle égale au temps caractéristique de boucle fermée ;

b) caractériser au moins des parties correspondantes du signal de charge ($l_i(t)$, du signal de mesure de processus ($y(t)$) et du signal ($X_a$) de contre-réaction de l'élément d'actionnement entre le début et la fin de la perturbation en calculant des coefficients d'une série de moments de chaque signal perturbé, dans laquelle chaque tel signal est une intégrale en fonction du temps du signal perturbé, dans laquelle les $n^{\text{ièmes}}$ moments sont calculés respectivement pour chaque échantillon par les expressions

$$M_n(y') = \sum_{j=0}^{j=e} [(-j/t_c)^n/n!] [\, Y(j) - Y(j-1)]$$

$$M_n(v') = \sum_{j=0}^{j=e} [(-j/t_c)^n/n!] [\, v(j) - v(j-1)]$$

$$M_n(l_i') = \sum_{j=0}^{j=e} [(-j/t_c)^n/n!] [l_i(j) - l_i(j-1)]$$

respectivement, dans lesquelles :

$y' =$ la dérivée du signal (y(t) de mesure du processus,

$v' =$ la dérivée du signal de commande final (v(t)),

$l_i' =$ les dérivées du signal de charge ($l_i$(t)),

$n =$ un nombre entier positif ou zéro pour le degré du moment,

$j =$ un compte de la durée d'échantillon à partir du début j = 0 de la perturbation jusqu'à la fin j = e de la perturbation, et

$t_c =$ durée caractéristique de la récupération de perturbation mesurée dans des intervalles d'échantillonnage calculés comme suit

$$t_c = (I(I + a_{m0}{}^*P) + D)/t_p$$

dans laquelle

$I =$ temps d'intégrale PID (proportionnel, intégral, par différenciation),

$D =$ temps de dérivée PID (proportionnel, intégral, par différenciation),

$P =$ bande proportionnelle PID (proportionnel; intégral, par différenciation),

$t_p =$ intervalle de calcul, et

$a_{m0} =$ coefficient identifié en relation avec le signal de mesure y(t),

c) exécuter une projection mathématique à partir du point de solution courante dans un sous-espace de solution de coefficient courant de l'équation de modèle de processus ayant la forme

$$Y = (y - L_u A^*{}_u - \Sigma_i L_i A_i{}^*)(A^*{}_m)^{-1}$$

dans laquelle

$Y$ est une transformée du signal de mesure y(t),

$V$ est une transformée de la commande finale v(t),

$L_i$ est une transformée des charges $l_i$(t),

$L_u$ est une transformée de la charge non mesurée $l_u$,

$A^*{}_m$ est une fonction transfert idéale du signal de mesure,

$A^*{}_l$ est une fonction transfert idéale de la charge mesurée, et

$A^*{}_u$ est une fonction transfert idéale des charges non mesurées, dans laquelle la projection comporte les étapes consistant à

I) calculer $S_0$, $S_1$, $S_{01}$, et Del par les équations

$$S_0 = \Sigma_i((l_{i0})^2 + (y_0)^2 + (l_{u0})^2$$
$$S_1 = \Sigma_i((l_{i1})^2 + (y_1)^2$$
$$s_{01} = \Sigma_i((l_{i0})(l_{i1})) + (y_0)(y_1)$$

$$Del = S_0^2 + (S_0 S_1 + (S_{01})^2)$$

dans lesquelles

$l_{i0} = M_0(l_i')$

$l_{i1} = M_1(l_i')$

$Y_0 = M_0(Y')$

$Y_1 = M_1(Y')$, et

$l_{u0} = M_0(l_u)$,

II) calculer les moments $U_0$, $U_1$ de signaux de commande ajustés par les équations

$$U_0 = v_0 - \Sigma i(l_{i0}a_{i0}) - y_0 a_{m0}$$
$$U_1 = v_1 - \Sigma_i(l_{i0}a_{i1} + y_0 a_{m0}) - y_0 a_{m1} - y_1 a_{m0}$$

dans lesquelles

$v_0 =$ le moment zéro caractérisant le signal de mesure de l'élément d'actionnement,

$v_1 =$ un premier moment caractérisant le signal de mesure de l'élément d'actionnement,

$a_{i0} =$ le moment zéro caractérisant la i$^{\text{ème}}$ charge,

$a_{i1}$ = un premier moment caractérisant la $i^{ème}$ charge;

$a_{m0}$ = un moment zéro caractérisant la charge non mesurée,

$a_{m1}$ = un premier moment caractérisant la charge non mesurée,

$y_{m0}$ = un moment zéro caractérisant le signal de mesure, et

$y_{m1}$ = un premier moment caractérisant le signal de mesure.

III) calculer les coefficients d'adaptation $b_0, b_1$ par les équations

$b_0 = [(S_0 + S_1)U_0 - S_{01}U_1]/Del$, et
$b_1 = (S_0 U_1 - S_{01}U_0)/Del$,

IV) calculer pour chaque compensateur de charge les coefficients de compensateur $a_{i0}$, $a_{i1}$ par les équations interactives

$a_{i0} = a_{i0} + b_0 I_{i0} + b_1 I_{i1}$
$a_{i1} = a_{i1} + b_1 I_{i0}$

V) calculer, pour le terme modèle de charge non mesuré, le processus inverse $a_{m0}$, $a_{m1}$ par les équations interactives

$a_{m0} = a_{m0} + b_0 y_0 + b_1 y_1$, et
$a_{m1} = a_{m1} + b_1 y_0$,

VI) calculer, pour chaque paire de moments de compensateur des paramètres correspondants de compensateur pour la fonction transfert de compensateur, un compensateur en duo,

d) compenser les signaux de charge ($I_i(t)$) avec les compensateurs agissant avec les coefficients de point de solution actualisée pour engendrer un signal de commande différencié,

e) additionner le signal de commande différencié à action directe avec un signal de mesure de l'élément d'actionnement, et

f) exécuter une intégration par boucle de contre-réaction de la somme des signaux combinés à action directe et de mesure de l'élément d'actionnement et du signal de commande par contre-réaction pour produire un signal de commande de l'élément d'actionnement.

FIG. 1

FIG. 2

39

*FIG. 3*

EP 0 307 466 B1

READ SIGNAL OUTPUT

100 $\Delta = I_i(t) - Ip_i(t)$

110 $a_O = 0?$

YES

NO

120 $a_1 \times a_O$

$>0$ LEADLAG

$<0$ LAG

130
$tt = |a_1/(gg-1)|$
Lag $=(tt \times Lag + \Delta)/(tt+1)$
Iff $=$ Iff $+$ Sgn$(a_1)$
$(gg=1) \times (\Delta - Lag))$

140
$tt = |a_1/(a_O \times (gg-1))|$
Lag $=(tt \times Lag + \Delta)/(tt+1)$
Iff $=$ Iff $+ a_O \times (Lag +$
$gg \times (\Delta - Lag))$

150
$tt = |a_1/a_O|$
Lag $=(tt \times Lag + \Delta)/(tt+1)$
Iff $=$ Iff $+ a_1 \times Lag$

160 Valv $=$ Output $+$ Iff

170 DISTURB FLAG?

NO

YES

A

B

FIG. 4A

*180* — MCount = 0

*190* — $|x - x_{ss}| > NT$ — YES

*200* — LoopFdFwd DSTRBNCE

NO

FFM

*210* — $|r(t) - y(t)| > NT$

*220* — C — NO

*230* — LoopFdBck DSTRBNCE — YES

*240* — 
$x_{ss} = x_p$
$x_1 = 0$
$x_2 = 0$
MXIO = 0
MXII = 0
IABX = 0
MNX = 0

*250* — 
t = I
TL = TMIN
TI = TLX3 + 2

*310* — D

*FIG. 4B*

FIG. 4C

B

t=t+1
TI=TI-1    300

D    310

OTL=TL    320

$x_1'=x_1'-tX(x-x_p)$
$x_2'=x_2'+\frac{t}{2}X(x-x_p)$    330

MCount=0
IO=x-x_{ss}    340

350
$|x'O|>$
MXIO    YES

MXIO=|x'O|    360

MCount=
MCount+1

NO

370
$|x'1|>$
MXI1    YES

MXI1=|x 1|    380

MCount=
MCount + 1

NO

400
MCount?    SOME

$T=\frac{MXI1}{MXIO}$    410

420
T>TL ?    YES

390
RECOVERY ?    NO    NO

YES    NONE

TL=
Min(T TMAX    430

E

43

*460* — $8 \times |r(t) - y(t)| > MXIO$ — YES

*470* — $TI < \Delta?$ — YES — $TI = \Delta$ *480* — NO — Meas

$TI = TI + (TL - OTL) \times 3$ — *440* — All

Meas — NO

*450* — $MXIO > NT$ — YES

Meas indicates calculations based on MXIO, TI, NT for the controlled measurement y(t).

NO

$MCount = 0$

$MNX = \dfrac{(MNX \times TL + X)}{(TL + 1)}$ — *490*

$IABX = IABX + |x - MNX|$ — *500*

*510* — $TI > 0?$ — NO

YES

*520* — $IABX < aa \times MXII$ OR $MXIO \leq NT$ — YES — *530* $MCount = MCount + 1$

$IABX = 0$

F

*FIG. 4D*

44

FIG. 4E

550

F

540
TI>O?

NO

560
MCount?

NOT All

570
TI=TL X 1.5+2

580
Loop Recovery

590
FOR EACH TERM: $x'_O = x - x_{ss}$

$$S_O = \sum_{AM} x'^2_O + L^2$$

$$S_I = \sum_{AM} x'^2_I$$

$$S_{OI} = \sum_{AM} (x'_O \times x'_I)$$

$$\Delta = S^2_O + [S_O S_I - S^2_{OI}]$$

600
$$V'_O = V - V_{ss} \qquad y'_O = y - y_{ss}$$
$$V'_O = V'_O - a_{mO} \times y'_O$$
$$V'_I = V'_I - a_{mO} \times y'_I - a_{mI} \times y'_O$$
$$I'_{iO} = (I_i - I_{i\,ss})$$
$$V'_O = V'_O - \sum_{FFM} a_{iO} \times I'_{iO}$$
$$V'_I = V'_I - \sum_{FFM} (a_{iO} \times I'_{iI} + a_{iI} \times I'_{iO})$$
$$\beta_O = [(S_I + S_O) \times V'_O - S_{OI} \times V'_I]/\Delta$$
$$\beta_I = (S_O \times V'_I - S_{OI} \times V'_O)/\Delta$$

Loop Cleared

620
$$x'_O = x - x_{ss}$$
$$a_O = a_O + \beta_O \times x'_O + \beta_I x'_I$$
$$a_I = a_I + \beta_I \times x'_O$$

630
$x_{ss} = x$

C

640
$x_p = x_i$

650
Return

45

FIG. 5